(19) Europäisches Patentamt
European Patent Office
Office européen des brevets

(11) EP 3 999 336 B1

(12) EUROPEAN PATENT SPECIFICATION

(45) Date of publication and mention of the grant of the patent:
**03.04.2024 Bulletin 2024/14**

(21) Application number: **20740291.8**

(22) Date of filing: **13.07.2020**

(51) International Patent Classification (IPC):
***B32B 25/14*** (2006.01) ***B32B 27/34*** (2006.01)
***C08J 5/12*** (2006.01) ***C08L 27/16*** (2006.01)
***C08L 77/10*** (2006.01)

(52) Cooperative Patent Classification (CPC):
(C-Sets available)
**C09J 5/06; B32B 25/08; B32B 25/14; B32B 27/34; C08L 27/16; C08L 77/02; C08L 77/06; C08L 77/10;**
B32B 2270/00; B32B 2307/306; B32B 2307/714; B32B 2457/00; B32B 2581/00; B32B 2605/00; C08F 214/22; (Cont.)

(86) International application number:
**PCT/EP2020/069696**

(87) International publication number:
**WO 2021/009092 (21.01.2021 Gazette 2021/03)**

(54) **COMPOSITE MATERIAL COMPRISING POLYAMIDE AND FLUOROELASTOMER**

VERBUNDMATERIAL AUS POLYAMID UND FLUORELASTOMER

MATÉRIAU COMPOSITE COMPRENANT DU POLYAMIDE ET DU FLUOROÉLASTOMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2019 IN 201921028839**

(43) Date of publication of application:
**25.05.2022 Bulletin 2022/21**

(73) Proprietor: **Solvay Specialty Polymers Italy S.p.A.**
**20021 Bollate (MI) (IT)**

(72) Inventors:
- **SHINGTE, Rahul**
  **Vadodara 390022 Gujarat (IN)**
- **MAHAPATRA, Sibdas, Singha**
  **Vadodara 390008 Gujarat (IN)**
- **KADAM, Vijay**
  **Vadodara 390008 Gujarat (IN)**
- **FANTONI, Matteo**
  **20020 Vanzaghello MI (IT)**
- **KAPELYUSHKO, Valeriy**
  **15121 Alessandria AL (IT)**

(74) Representative: **Benvenuti, Federica**
**SyensQo S.A.**
**Intellectual Assets Management**
**98, rue de la Fusée**
**1130 Bruxelles (BE)**

(56) References cited:
**EP-A1- 3 437 850**
**WO-A1-2007/082924**
**GB-A- 1 504 438**
**US-A- 4 032 699**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08K 5/0025; C08K 5/136; C08K 5/5399;
C08L 2205/025; C08L 2205/035; C09J 2427/006;
C09J 2477/006

C-Sets
**C08L 27/16, C08K 13/02, C08L 27/16;**
**C08L 77/02, C08K 7/14, C08L 81/02;**
**C08L 77/06, C08K 7/14, C08L 81/02;**
**C08L 77/10, C08K 7/14, C08L 81/02;**
C08F 214/22, C08F 214/24

## Description

### Technical Field

The present disclosure relates to fluoroelastomer-polyamide composite materials, to methods of making them and shaped articles containing them.

### Background Art

Fluoroelastomers are rubber-like materials that are widely used as seals or sealing component in articles exposed to fuels because of their high chemical resistance to these compounds.

In applications where the sealing article has to withstand mechanical forces, for example as a component of a part of a motor vehicle or for safety reasons, for example, as a component of a storage device for fuels, the fluoroelastomer component may be secured to a metal part. Such composite materials comprise the fluoroelastomer to provide the flexible and thus sealing part and the metal to provide the stiff/rigid component. However, the metal part adds to the weight of the composite material. This can be a disadvantage, in particular in the transportation industry, where weight adds to fuel consumption and/or transportation costs.

This has led to the quest for replacing of metal part with alternative plastic components as a rigid component. Polyamides, and more particularly aromatic polyphthalamides, are suitable candidates for replacing metals due to their outstanding mechanical properties. Now, when substituting metal components in metal-fluororubber junctions, the replacement material, that is to say the polyamide, is required to adhere firmly and strongly to the fluoroelastomer component.

Several techniques have been disclosed in the past for enabling creation of fluoroelastomer/polyamide junctions whereas the two components adhere firmly to each other.

GB1504438 discloses certain rubber-plastics composites, which are produced by contacting a vulcanizable fluoroelastomer which is a copolymer of vinylidene fluoride (VDF) with at least one other fluoromonomer, with a thermoplastic polyamide, fusing at least the contact surface of the polyamide, cooling the polyamide to solidify it in contact with the fluoroelastomer, and vulcanizing the fluoroelastomer before the polyamide is solidified. As vulcanizable fluoroelastomer, examples are provided of curable formulations including VDF-based fluoroelastomer in combination with diamine curing agents (either as free diamines or as carbamate derivatives).

US6162385 discloses composite articles comprising at least two subcomponents which are firmly joined to one another, which comprise i) a vulcanizate produced by vulcanization of a fluororubber, and ii) a polyamide containing thermoplastic, which shall possess a given amount of amino end groups. In particular, the said vulcanizate is produced by vulcanization of a fluororubber ionically curable composition including a VDF-based elastomer and an aromatic dihydroxy curing agent.

US2015/0251386 discloses a resin-rubber composite in which a lowpressure plasma-treated polyamide-based resin-molded product and a polyol-vulcanizable fluororubber composition that forms a fluororubber layer are directly bonded by vulcanization without interposing an adhesive.

US 4032699 describes a fluorinated elastomer composed of VDF, HFP and a small amount ot CTFE. However it does not mention polyamides.

WO2007/082924 describes describes a laminate comprising a polyamide layer, a tie layer and a fluoropolymer layer. The tie layer comprises a fluoropolymer modified with sulfonic or carboxylic acid groups, possibly in a blend with an unmodified fluoropolymer. VDF polymers and ECTFE are mentioned as the unmodified fluoropolymer, but not their mixtures. The fluoropolymer is not disclosed to be an elastomer.

EP3437850 describes a multilayer tube comprising a layer of a semiaromatic polyamide in direct contact with a layer of TFE/CTFE/PPVE-terpolymer. The tube has good peel strength. The document does not mention VDF-based elastomers.

While these solutions may be practiced for leading to polyamide/fluororubber junctions, the adhesion so achieved may be unsatisfactory, in particular when targeting certain high melt temperature polyamides.

On the other side, certain teachings exist in the art, in connection with the use of certain chlorotrifluoroethylene-containing polymer additive for increasing adhesion of fluororubbers to metals, when using interfacial silane adhesive.

US4612351 relates to fluoroelastomeric compositions based on vinylidene fluoride, having a high adhesion to metals in the vulcanized state, and characterized in that they contain a minor amount of chlorotrifluoroethylene which is present as a comonomer of an elastomeric copolymer of vinylidene fluoride. This document specifically discloses certain metal/adhesive/fluororubber assemblies wherein the fluororubber layer is obtained by curing certain ionically vulcanizable fluoroelastomeric compositions comprising a polymer comprising vinylidene fluoride and chlorotrifluoroethylene (A) in an elastomeric mixture consisting essentially of: (A) 1.3 to 30 parts of said CTFE/VDF copolymer; and (B) 98.7 to 70 parts by weight of an elastomeric VDF copolymer (B). An adhesive (in particular a reactive silane adhesive)

is used in all working embodiments for adhering the rubber composition to the metal surface.

Similarly, EP2698247 discloses a rubber-metal laminate comprising metal, an adhesive layer and a perfluoroelastomer layer, the perfluoroelastomer layer being formed from a vulcanizate layer of a peroxide-curable blend comprising 2 to 10 parts by weight of a vinylidene fluoride-chlorotrifluoroethylene copolymer, based on 100 parts by weight of a tetrafluoroethylene-perfluoroalkylvinylether perfluoroelastomer, with the use of an adhesive comprising aminosilane and vinylsilane as main components.

**Summary of invention**

Surprisingly, the Applicant has found that strong direct bonds between certain fluoropolymers and polyamides can be formed by using as additive certain chlorotrifluoroethylene-containing elastomers, in an ionic curable blend. It has also been found that by using the specific formulation above sketched, strong bonds can be formed even with reinforced compounds based on the said polyamides and reinforcing materials.

Therefore, there is provided a composite material comprising a first component directly bonded to a second component, wherein:

- the first component is a cured fluoroelastomer component, obtained from curing a fist component precursor composition [composition (C1)]
  comprising:

  - at least one fluororubber precursor selected from the group consisting of:

    (i) a blend of:

      (A) at least one vinylidene fluoride based fluoroelastomer comprising recurring units derived from vinylidene fluoride (VDF) and from at least one additional (per)fluorinated monomer different from VDF [fluoroelastomer (A)]; and
      (B) at least one chlorotrifluoroethylene-containing polymer additive [additive (B)] different from fluoroelastomer (A);

    (ii) at least one Cl-modified vinylidene fluoride based fuoroelastomer comprising recurring units derived from VDF, recurring units derived from chlorotrifluoroethylene, and at least one additional (per)fluorinated monomer different from VDF and CTFE [fluoroelastomer (A')]; and
    (iii) mixtures thereof;

  wherein the said fluororubber precursor has an overall content of chlorine ranging from 0.2 to 5% wt, based on the total weight of fluororubber precursor;
  - at least one polyhydroxylated compound [compound (OH)];
  - at least one accelerant [accelerant (A)] selected from the group consisting of organic P, As, Se or S-onium compound, aminophosphonium derivatives, phosphoranes, and diphosphine-iminium compounds;
  and
  - the second component is a component molded from a second component precursor composition [composition (C2)] comprising at least one polyamide resin in an amount of at least 50 % wt, based on the total weight of composition (C2).

In another aspect, there is provided a shaped article comprising the composite material described above.

In a further aspect, there is provided a method of making a composite material comprising:

i) providing

  a) a fist component precursor composition comprising a fist component precursor composition [composition (C1)] comprising:

  - at least one fluororubber precursor selected from the group consisting of:

    (i) a blend of:

      (A) at least one vinylidene fluoride based fluoroelastomer comprising recurring units derived from

vinylidene fluoride (VDF) and from at least one additional (per)fluorinated monomer different from VDF [fluoroelastomer (A)]; and

(B) at least one chlorotrifluoroethylene-containing polymer additive [additive (B)] different from fluoroelastomer (A);

(ii) at least one Cl-modified vinylidene fluoride based fuoroelastomer comprising recurring units derived from VDF, recurring units derived from chlorotrifluoroethylene, and at least one additional (per)fluorinated monomer different from VDF and CTFE [fluoroelastomer (A')]; and

(iii) mixtures thereof;

wherein the said fluororubber precursor has an overall content of chlorine ranging from 0.2 to 5% wt, based on the total weight of fluororubber precursor;

- at least one polyhydroxylated compound [compound (OH)];
- at least one accelerant [accelerant (A)] selected from the group consisting of organic P, As, Se or S-onium compound, aminophosphonium derivatives, phosphoranes, and diphosphine-iminium compounds;

b) a second component precursor composition (C2) comprising at least one polyamide in an amount of at least 50 % wt., based on the total weight of composition (C2);

(ii) providing first component by curing composition (C1) and second component by molding composition (C2),

wherein the method comprises forming a direct bond between first and second component by curing the said first component precursor composition (C1) while contacting the first component precursor component (C1) with the said second component precursor composition (C2) or with the said second component.

## Description of embodiments

For the purposes of this invention, the term "fluoroelastomer" as used for designating fluoroelastomer (A) and/or fluoroelastomer (A') is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (perfluorinated monomer) and, optionally, recurring units derived from at least one ethylenically unsaturated monomer free from fluorine atom (hereafter, hydrogenated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Fluoroelastomers (A) and (A') are in general amorphous products or products having a low degree of crystallinity (crystalline phase less than 20 % by volume) and a glass transition temperature ($T_g$) below room temperature. In most cases, the fluoroelastomer (A) has advantageously a $T_g$ below 10°C, preferably below 5°C, more preferably 0°C, even more preferably below -5°C.

Fluoroelastomers (A) and (A') typically comprise at least 15 % moles, preferably at least 20 % moles, more preferably at least 35 % moles of recurring units derived from VDF, with respect to all recurring units of the fluoroelastomer.

Fluoroelastomers (A) and (A') typically comprises at most 85 % moles, preferably at most 80 % moles, more preferably at most 78 % moles of recurring units derived from VDF, with respect to all recurring units of the fluoroelastomer.

As said, fluoroelastomer (A') comprises recurring units derived from chlorotrifluoroethylene; while fluoroelastomer (A) may or may not comprise recurring units derived from chlorotrifluoroethylene, it is generally practical for fluoroelastomer (A) to be essentially deprived of said moieties.

Non limitative examples of suitable (per)fluorinated monomers, recurring units derived therefrom being comprised in the fluoroelastomer (A) and/or (A'), are notably:

(a) $C_2$-$C_8$ perfluoroolefins , such as tetrafluoroethylene (TFE) and hexafluoropropylene (HFP);

(b) hydrogen-containing $C_2$-$C_8$ olefins different from VDF, such as vinyl fluoride (VF), trifluoroethylene (TrFE), perfluoroalkyl ethylenes of formula $CH_2$ = CH-Rf, wherein $R_f$ is a $C_1$-$C_6$ perfluoroalkyl group;

(c) $C_2$-$C_8$ chloro and/or bromo and/or iodo-fluoroolefins such as chlorotrifluoroethylene (CTFE);

(d) (per)fluoroalkylvinylethers (PAVE) of formula $CF_2$=$CFOR_f$, wherein $R_f$ is a $C_1$-$C_6$ (per)fluoroalkyl group, e.g. $CF_3$, $C_2F_5$, $C_3F_7$;

(e) (per)fluoro-oxy-alkylvinylethers of formula $CF_2$ = CFOX, wherein X is a $C_1$-$C_{12}$ ((per)fluoro)-oxyalkyl comprising catenary oxygen atoms, e.g. the perfluoro-2-propoxypropyl group;

(f) (per)fluorodioxoles having formula :

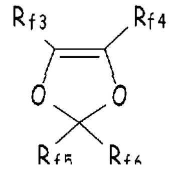

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. $-CF_3$, $-C_2F_5$, $-C_3F_7$, - $OCF_3$, $-OCF_2CF_2OCF_3$.

(g) (per)fluoro-methoxy-vinylethers (MOVE, hereinafter) having formula:

$$CFX_2 = CX_2OCF_2OR''_f$$

wherein $R''_f$ is selected among $C_1$-$C_6$ (per)fluoroalkyls , linear or branched; $C_5$-$C_6$ cyclic (per)fluoroalkyls; and $C_2$-$C_6$ (per)fluorooxyalkyls, linear or branched, comprising from 1 to 3 catenary oxygen atoms, and $X_2$ = F, H; preferably $X_2$ is F and $R''_f$ is $-CF_2CF_3$ (MOVE1); $-CF_2CF_2OCF_3$ (MOVE2); or $-CF_3$ (MOVE3).

Generally fluoroelastomer (A) and (A') will comprise recurring units derived from VDF and recurring units derived from HFP; further fluoroelastomer (A) and (A') may or may not comprise recurring units derived from TFE.

Fluoroelastomer (A) or (A') may optionally further comprise recurring units derived from one or more than one monomer free from fluorine (hydrogenated monomer, herein after). Examples of hydrogenated monomers are notably $C_2$-$C_8$ non-fluorinated olefins (Ol), in particular $C_2$-$C_8$ non-fluorinated alpha-olefins (Ol), including ethylene, propylene, 1-butene; diene monomers; styrene monomers; $C_2$-$C_8$ non-fluorinated alpha-olefins (Ol), and more particularly ethylene and propylene, will be selected for achieving increased resistance to bases.

Optionally, fluoroelastomer (A) or (A') may comprises recurring units derived from at least one bis-olefin [bis-olefin (OF)] having general formula :

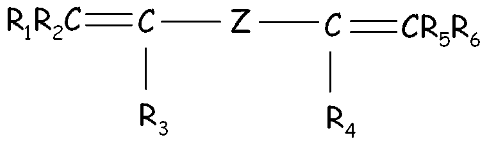

wherein $R_1$, $R_2$, $R_3$, $R_4$, $R_5$ and $R_6$, equal or different from each other, are H, a halogen, or a $C_1$-$C_5$ optionally halogenated group, possibly comprising one or more oxygen group; Z is a linear or branched $C_1$-$C_{18}$ optionally halogenated alkylene or cycloalkylene radical, optionally containing oxygen atoms, or a (per)fluoropolyoxyalkylene radical, e.g. as described in EP 661304 A (AUSIMONT SPA) 5/07/1995 .

The bis-olefin (OF) is preferably selected from the group consisting of those complying with formulae (OF-1), (OF-2) and (OF-3) :

(OF-1)

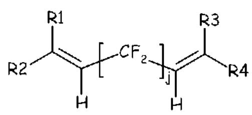

wherein j is an integer between 2 and 10, preferably between 4 and 8, and R1, R2, R3, R4, equal or different from each other, are H, F or $C_{1-5}$ alkyl or (per)fluoroalkyl group;

(OF-2)

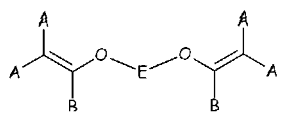

wherein each of A, equal or different from each other and at each occurrence, is independently selected from F, Cl, and H; each of B, equal or different from each other and at each occurrence, is independently selected from F, Cl, H and $OR_B$, wherein $R_B$ is a branched or straight chain alkyl radical which can be partially, substantially or completely fluorinated or chlorinated; E is a divalent group having 2 to 10 carbon atom, optionally fluorinated, which may be inserted with ether linkages;
preferably E is a $-(CF_2)_m-$ group, with m being an integer from 3 to 5; a preferred bis-olefin of (OF-2) type is $F_2C=CF-O-(CF_2)_5-O-CF=CF_2$.

(OF-3)

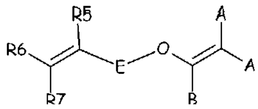

wherein E, A and B have the same meaning as above defined; R5, R6, R7, equal or different from each other, are H, F or $C_{1-5}$ alkyl or (per)fluoroalkyl group.

Fluoroelastomers (A) suitable in the compositions of the invention may comprise, in addition to recurring units derived from VDF and HFP, one or more of the following:

- recurring units derived from at least one bis-olefin [bis-olefin (OF)] as above detailed;
- recurring units derived from at least one (per)fluorinated monomer different from VDF and HFP; and
- recurring units derived from at least one hydrogenated monomer.

Among specific monomer compositions of fluoroelastomers (A) suitable for the purpose of the invention, mention can be made of fluoroelastomers having the following monomer compositions (in mol %) :

(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, bis-olefin (OF) 0-5 %;
(ii) vinylidene fluoride (VDF) 50-80 %, perfluoroalkyl vinyl ethers (PAVE) 5-50 %, tetrafluoroethylene (TFE) 0-20 %, bis-olefin (OF) 0-5 %;
(iii) vinylidene fluoride (VDF) 20-30 %, $C_2$-$C_8$ non-fluorinated olefins (Ol) 10-30 %, hexafluoropropene (HFP) and/or perfluoroalkyl vinyl ethers (PAVE) 18-27 %, tetrafluoroethylene (TFE) 10-30 %, bis-olefin (OF) 0-5 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %, bis-olefin (OF) 0-5 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, bis-olefin (OF) 0-5 %.

Fluoroelastomers (A') suitable in the compositions of the invention may comprise, in addition to recurring units derived from VDF and CTFE, one or more of the followings:

- recurring units derived from at least one bis-olefin [bis-olefin (OF)] as above detailed;
- recurring units derived from at least one (per)fluorinated monomer different from VDF and CTFE; and
- recurring units derived from at least one hydrogenated monomer.

Fluoroelastomer (A') generally comprises recurring units derived from CTFE in an amount of at most 5 % moles, preferably at most 4 % moles, even more preferably at most 3 % moles and/or in an amount of at least 0.2 % moles, preferably of at least 0.3 % moles, even more preferably of at least 0.35 % moles, with respect to the total moles of fluoroelastomer (A').
Among specific monomer compositions of fluoroelastomers (A') suitable for the purpose of the invention, mention can be made of fluoroelastomers having the following monomer compositions (in mol %) :

(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, chlorotrifluoroethylene (CTFE) 0.2-5 %, bis-olefin (OF) 0-5 %;
(ii) vinylidene fluoride (VDF) 50-80 %, perfluoroalkyl vinyl ethers (PAVE) 5-50 %, tetrafluoroethylene (TFE) 0-20 %, chlorotrifluoroethylene (CTFE) 0.2-5 %, bis-olefin (OF) 0-5 %;
(iii) vinylidene fluoride (VDF) 20-30 %, $C_2$-$C_8$ non-fluorinated olefins (Ol) 10-30 %, hexafluoropropene (HFP) and/or

perfluoroalkyl vinyl ethers (PAVE) 18-27 %, tetrafluoroethylene (TFE) 10-30 %, chlorotrifluoroethylene (CTFE) 0.2-5 %, bis-olefin (OF) 0-5 %;

(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %, chlorotrifluoroethylene (CTFE) 0.2-5 %, bis-olefin (OF) 0-5 %;

(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, chlorotrifluoroethylene (CTFE) 0.2-5 %, bis-olefin (OF) 0-5 %.

As said, fluororubber precursor may be a blend comprising at least one chlorotrifluoroethylene-containing polymer additive [additive (B)], as detailed above.

The said additive (B) generally qualifies equally as a fluoroelastomer, as detailed above. Additive (B) may or may not comprise recurring units derived from vinylidene fluoride (VDF), and may or may not comprise recurring units derived from one or more than one (per)fluorinated monomer, as described above in connection with fluoroelastomer (A'), different from VDF and CTFE.

Preferably, additive (B) is a fluoroelastomer comprising recurring units derived from CTFE, recurring units derived from VDF, and optionally recurring units derived from one or more than one (per)fluorinated monomer, as described above in connection with fluoroelastomer (A) and (A'), different from VDF and CTFE.

Additive (B) comprises recurring units derived from CTFE in an amount of more than 5 % moles, preferably of at least 10 % moles, even more preferably of at least 15 % moles and/or in an amount of at most 75 % moles, preferably at most 70 % moles, even more preferably at most 65 % moles, with respect to the total moles of additive (B). It is generally preferred for additive (B) to comprise a major amount (of exceeding 50 % moles) of recurring units derived from CTFE.

Very good results have been obtained when additive (B) was a copolymer of CTFE and VDF, comprising from 54 to 60 % moles of recurring units derived from CTFE, with respect to the total moles of recurring units of additive (B), the remaining recurring units of additive (B) being VDF units.

As said, the fluororubber precursor (i) may be a blend of fluoroelastomer (A) and additive (B), (ii) may be a fluoroelastomer (A') or (iii) may be a mixture thereof. Without being bound by this theory, the Applicant considers that chlorotrifluoroehylene units may be equally delivered in the fluororubber precursor by incorporating in a CTFE-poor or CTFE-free fluoroelastomer a CTFE-rich additive, or by incorporating CTFE units in sufficient amount in the fluoroelastomer itself.

Whichever is the way of conveying the CTFE units, for effectively positively impacting adhesion in the composite material of the invention, it is necessary for CTFE to be contained in the said fluororubber precursor in an amount such that the overall content of chlorine of the said fluororubber precursor ranges from 0.2 to 5% wt, based on the total weight of fluororubber precursor.

When fluororubber precursor is a blend of fluoroelastomer (A) and additive (B), the amount of additive (B) is generally of at least 1 phr, preferably at least 2 phr, more preferably at least 3 phr and/or at most 25 phr, preferably at most 20 phr, based on 100 weight parts of fluoroelastomer (A).

As said, the composition (C1) comprises at least one polyhydroxylated compound or compound (OH): it may comprise one or more than one compounds (OH). Aromatic or aliphatic polyhydroxylated compounds, or derivatives thereof, may be used; examples thereof are described, notably, in EP 335705 A (MINNESOTA MINING) 4/10/1989 and US 4233427 (RHONE POULENC IND) 11/11/1980. Among these, mention will be made in particular of:

- dihydroxy, trihydroxy and tetrahydroxy benzenes, naphthalenes or anthracenes;
- bisphenols of formula (B):

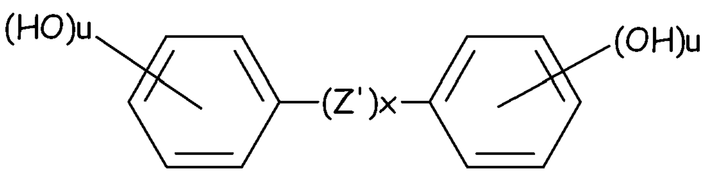

wherein:

- Z' is selected from the group consisting of bivalent $C_1$-$C_{13}$ alkyl or alkylidene group, $C_4$-$C_{13}$ cycloaliphatic, $C_6$-$C_{13}$ aromatic or arylalkylenic groups, optionally substituted with at least one chlorine or fluorine atom; a thio (-S-), oxy (-O-), carbonyl (-C(O)-), sulphinyl (-S(O)-) and sulphonyl group (-$SO_2$-);
- x is 0 or 1;

- u, equal to or different from each other, is independently at each occurrence an integer of at least 1, preferably 1 or 2;
- and wherein the phenyl rings can be optionally substituted by one or more substituents selected from the group consisting of chlorine, fluorine, bromine; -CHO, $C_1$-$C_8$ alkoxy groups, -$COOR_{10}$ groups, wherein $R_{10}$ is H or $C_1$-$C_8$ alkyl, $C_6$-$C_{14}$ aryl, $C_4$-$C_{12}$ cycloalkyl.

In formula (B), when Z' is a $C_1$-$C_{13}$ divalent alkyl group, it can be for example methylene, ethylene, chloroethylene, fluoroethylene, difluoroethylene, 1,3-propylene, tetramethylene, chlorotetramethylene, fluorotetramethylene, trifluorotetramethylene, 2-methyl-1,3-propylene, 2-methyl-1,2-propylene, pentamethylene, hexamethylene, hexafluoroisopropylidene.

In formula (B), when Z' is a $C_1$-$C_{13}$ divalent alkylidene group, it can be for example ethylidene, dichloroethylidene, difluoroethylidene, propylidene, isopropylidene, trifluoroisopropylidene, hexafluoroisopropylidene, butylidene, heptachlorobutylidene, heptafluorobutylidene, pentylidene, hexylidene, 1,1-cyclohexylidene.

In formula (B), when Z' is $C_4$-$C_{13}$ cycloaliphatic group, it can be for example 1,4-cyclohexylene, 2-chloro-1,4-cyclohexylene, 2-fluoro-1,4-cyclohexylene, 1,3-cyclohexylene, cyclopentylene, chlorocyclopentylene, fluorocyclopentylene, and cycloheptylene.

When Z' is a $C_6$-$C_{13}$ aromatic or arylalkylenic group, it can be for example m-phenylene, p-phenylene, 2-chloro-1,4-phenylene, 2-fluoro-1,4-phenylene, o-phenylene, methyl phenylene, dimethylphenylene, trimethylphenylene, tetramethyl phenylene, 1,4-naphthylene, 3-fluoro-1,4-naphthylene, 5-chloro-1,4-naphthylene, 1,5-naphtylene and 2,6-naphthylene.

Among dihydroxy benzenes, as mentioned above, compound (OH) may be selected from the group consisting of catechol, resorcinol, 2-methyl resorcinol, 5-methyl resorcinol, hydroquinone, 2-methyl hydroquinone, 2,5-dimethyl hydroquinone, 2-t-butyl hydroquinone.

Among dihydroxy naphthalenes, as mentioned above, compound (OH) may be selected from the group consisting of 1,5-dihydroxynaphthalene, 2,7-dihydroxynaphthalene, 1,7-dihydroxynaphthalene, 2,3-dihydroxynaphthalene, in particular, 1,5-dihydroxynaphthalene.

Among compounds (OH) of formula (B), hexafluoroisopropylidene bis (4-hydroxybenzene), known as bisphenol AF, 4,4'-dihydroxydiphenyl sulphone and isopropylidene bis(4-hydroxybenzene), known as bisphenol A, are preferred, with bisphenol AF being particularly preferred.

It is also understood that compounds (OH) also encompass derivatives of afore-mentioned dihydroxy, trihydroxy and tetrahydroxy benzenes, naphthalenes or anthracenes; and of afore-mentioned bisphenols of formula (B); among those derivatives which may be used as embodiments for compounds (OH), mention can be notably made of metal salts formed by the corresponding anion of said polyhydroxylated compounds wherein one or more of the hydroxyl group has been deprotonated, with one or more than one cation (as required for reaching neutrality) of a metal, typically of an alkaline or alkaline earth metal; examples thereof are notably the di-potassic salt of bisphenol AF and the mono-sodic monopotassic salt of bisphenol AF.

Further in addition, organic P, As, Se or S-onium salts, aminophosphonium salts and diphosphine-iminium salts of hydroxylates of afore-mentioned polyhydroxylated compound can be used, i.e. salts formed by the anion of said polyhydroxylated compounds wherein one or more of the hydroxyl group has been deprotonated, with one or more cations used as accelerant (A) can also be used.

The amount of the polydroxylated compound is generally of at least 0.5 weight parts, preferably at least 1 weight parts, and/or generally at most 15 weight parts, preferably at most 10 weight parts, per 100 weight parts of fluoroelastomer (A).

The composition (C1) comprises at least one accelerant selected from the group consisting of organic P, As, Se or S-onium compound, aminophosphonium derivatives, phosphoranes, and diphosphine-iminium compounds.

Organic onium compounds which are suitable in the composition of the invention generally comply with formula (O):

$$\{[R^1R^2R^3R^4Q]^+\}_nX_I^{n-}$$

wherein:

- Q is selected from the group consisting of phosphorus, arsenic, antimony, sulphur; preferably phosphorus;
- $X_I$ is an organic or inorganic anion, preferably selected from the group consisting of halides, sulphate, acetate, phosphate, phosphonate, hydroxide, alkoxide, phenate, bisphenate;
- n is the valence of the $X_I$ anion;
- each of $R^2$, $R^3$, $R^4$, $R^5$, equal to or different from each other, is independently the one from the other selected from the group consisting of:

a $C_1$-$C_{20}$ alkyl group, a $C_6$-$C_{20}$ aryl group, a $C_6$-$C_{20}$ arylalkyl group, a $C_1$-$C_{20}$ alkenyl group;
a halogen selected from chlorine, fluorine, bromine;
a cyano group, a group of formula $-OR_B$ or $-COOR_B$, wherein $R_B$ is an alkyl, aryl, arylalkyl or alkenyl; wherein two groups selected from $R_2$, $R_3$, $R_4$, $R_5$ may form with Q a cyclic structure;
with the proviso that when Q is a sulphur atom one of the $R^2$, $R^3$, $R^4$, $R^5$ radicals is not present.

Amino-phosphonium derivatives which are suitable for use in composition (C1) generally comply with formula (AP-1) or (AP-2):

$$\{[P(NR^6R^7)_nR^8_{4-n}]^+\}_qY^{q-} \text{ (AP-1)}$$

$$\{[R^8_{3-r}(NR^6R^7)_rP\text{-}E\text{-}P(NR^6R^7)_rR^8_{3-r}]^{2+}\}\{Y^{q-}\}_{2/q} \text{ (AP-2)}$$

wherein:

- each of $R^6$, $R^7$ and $R^8$, equal to or different from each other, is independently selected from the group consisting of:

  $C_1$-$C_{18}$ alkyl group (preferably $C_1$-$C_{12}$ alkyl group); $C_4$-$C_7$ cycloalkyl group; $C_6$-$C_{18}$ aryl group (preferably $C_6$-$C_{12}$ aryl group); $C_6$-$C_{18}$ arylalkyl group (preferably $C_6$-$C_{12}$ arylalkyl group);
  $C_1$-$C_{18}$ oxyalkyl group comprising one or more than one hydroxyl or oxygen ethereal group;
  and wherein $R^6$, $R^7$ and $R^8$ can optionally contain halogens, CN, OH, carbalkoxy groups; wherein $R^6$ and $R^7$ can form with the nitrogen atom an heterocyclic ring;
  - E is a $C_1$-$C_6$ divalent alkylenic, oxyalkylenic or $C_6$-$C_{12}$ arylenic radical;
  - n is an integer from 1 to 4;
  - r is an integer from 1 to 3;
  - q is the valence of the anion Y, and is preferably an integer from 1 to 2;
  - Y is an organic or inorganic anion having valence q; Y can be selected from halides, perchlorate, nitrate, tetrafluoroborate, hexafluorophosphate, oxalate, acetate, stearate, haloacetate, para-toluensulphonate, phenate, bisphenate, hydroxide; Y can also be a complex anion for example $ZnCl_4^{2-}$ , $CdCl_4^{2-}$, $NiBr_4^{2-}$, $HgI_3^-$.

Phosphoranes which are suitable in the composition (C1) generally comply with formula (P):

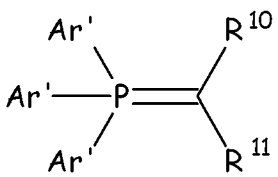

wherein:

- each of Ar', equal to or different from each other, is a optionally substituted aryl group, preferably an optionally substituted phenyl group or an optionally substituted naphthyl group;
- each of $R^{10}$ and $R^{11}$, equal to or different from each other, is independently selected from the group consisting of -H, -CN, $C_1$-$C_8$ alkyl, - O-C(O)-$R^{12}$ group, -C(O)-$R^{12}$ group, -$NR^{13}$-C(O)-$R^{12}$ group, with $R^{12}$ being a $C_1$-$C_6$ (cyclo)alkyl group, and $R^{13}$ being H or a $C_1$-$C_6$ (cyclo)alkyl group, $R^{10}$ and $R^{11}$ possibly forming together with the carbon atom of the P=C bond a cyclic group.

Diphosphine-iminium compounds which are suitable in the composition (C1) generally comply with formula (I) :

$$[(R^{14})_3P{=}N{=}P(R^{14})_3]^+\}_zX^{z-} \qquad \text{(I)}$$

wherein:

- $R^{14}$, equal to or different from each other at each occurrence, is selected from the group consisting of $C_1$-$C_{12}$ hydrocarbon groups, optionally comprising one or more than one group including a heteroatom selected from the group consisting of O, N, S, halogen;

- X is an anion of valence z, with z being an integer, generally 1 or 2.

Examples of accelerants (A) that may be used include: quaternary ammonium or phosphonium salts as notably described in EP 335705 A (MINNESOTA MINING) 4/10/1989 and US 3876654 (DUPONT) 8/04/1975 ; aminophosphonium salts as notably described in US 4259463 (MONTEDISON SPA) 31/03/1981 ; phosphoranes as notably described in US 3752787 (DUPONT) 14/08/1973 ; diphosphine-iminium compounds as described in EP 0120462 A (MONTEDISON SPA) 3/10/1984 or as described in EP 0182299 A (ASAHI CHEMICAL) 28/05/1986 .

Quaternary phosphonium salts and aminophosphonium salts are preferred as accelerants (A), and more preferably salts of tetrabutylphosphonium, of tetrabutyl ammonium, of 1,1-diphenyl-1-benzyl-N,N-diethyl-phosphoramine of formula:

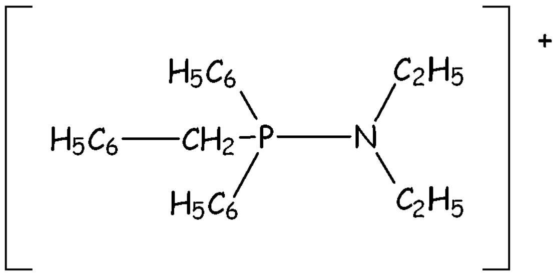

(in particular its chloride, also known as 1-chloro-N,N-diethyl-1,1-diphenyl-1(phenylmethyl) phosphoramine) and of benzyl(diethylamino)diphenylphosphanium of formula:

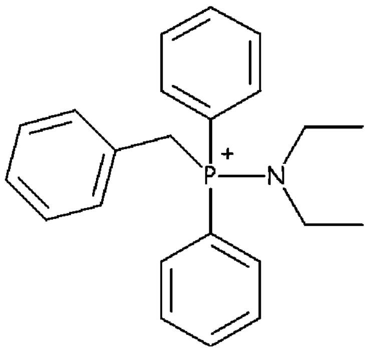

Instead of using the accelerator (A) and the compound (OH) separately, it is also possible to provide the same combined in composition (C1) by mixing into the composition (C1) an adduct between an accelerant (A) and a compound (OH) in a mole ratio of from 1:2 to 1:5 and preferably from 1:3 to 1:5. In said adducts, the cation is hence represented by the positively charged moiety of any of the accelerants (A), in particular those selected from the group consisting of organic onium compounds, as detailed above, amino-phosphonium derivatives and imine compounds as listed above, and the anion is represented by the said polyhydroxylated compounds, wherein one or more of the hydroxyl group has been deprotonated.

The adducts between the accelerant (A) and the compound (OH) are generally obtained by melting a blend of the accelerant (A) and the compound (OH) in the indicated mole ratios, or by melting the mixture of the 1:1 adduct supplemented with an additional amount of the compound (OH) in the indicated amounts. Optionally, an excess of the accelerant (A), relative to that contained in the adduct, may also be present.

The following are particularly preferred as cations for the preparation of the adduct: 1,1-diphenyl-1-benzyl-N-diethylphosphoramine and tetrabutylphosphonium; particularly preferred anions are those derived from bisphenol compounds in which the two aromatic rings are bonded via a divalent radical chosen from perfluoroalkyl groups of 3 to 7 carbon atoms, and the OH groups are in the para position. A method suitable for the preparation of an adduct as above described is described in European patent application EP 0684277 A (AUSIMONT SPA) 29/11/1995.

The composition (C1) generally comprises the accelerant (A) in an amount of at least 0.05, preferably at least 0.1, more preferably at least 0.3 weight parts per 100 weight parts of fluoroelastomer (A), and/or generally of at most 8, preferably at most 5, more preferably at most 3 wieght parts per 100 weight parts of fluoroelastomer (A).

Generally composition (C1) further comprises:

- at least one metal oxide selected from the group consisting oxides of divalent metals; and
- optionally, at least one metal hydroxide, wherein the amount of said metal hydroxide, if present, is generally below 9 phr, preferably below 7 phr based on 100 weight parts of fluoroelastomer (A).

Among metal oxides of divalent metals, mention can be notably made of ZnO, MgO, PbO, and their mixtures, with MgO being preferred.

The amount of the metal oxide is generally of at least 0.5 phr, preferably at least 1 phr, and/or generally at most 25 phr, preferably at most 15 phr, more preferably at most 10 phr, with respect to the fluoroelastomer (A) weight.

Hydroxides which can be used are generally selected from the group consisting of $Ca(OH)_2$, $Sr(OH)_2$, $Ba(OH)_2$.

Also, other conventional additives, such as reinforcing fillers (e.g. carbon black), thickeners, pigments, antioxidants, stabilizers and the like, may then be added to the composition (C1).

Carbon black is among preferred reinforcing fillers. When used, reinforcing fillers, and more particularly carbon black, may be present in the composition (C1) in an amount of at least 10, preferably at least 15, more preferably at least 20 weight parts; and/or at most 50, preferably at most 45, more preferably at most 40 weight parts per 100 weight parts of fluoroelastomer (A) and/or (A').

As said, the second component is a component molded from a second component precursor composition [composition (C2)] comprising at least one polyamide resin in an amount of at least 50 % wt, based on the total weight of composition (C2).

The expression 'polyamide' is hereby used according to its usual meaning, i.e. for designating polymers which comprise recurring units ($R_{PA}$) which are derived from the polycondensation of at least one dicarboxylic acid component (or derivative thereof) and at least one diamine component, and/or from the polycondensation of aminocarboxylic acids and/or lactams.

The expression 'derivative thereof' when used in combination with the expression 'carboxylic acid' is intended to denote whichever derivative which is susceptible of reacting in polycondensation conditions to yield an amide bond. Examples of amide-forming derivatives include a mono- or di-alkyl ester, such as a mono- or di-methyl, ethyl or propyl ester, of such carboxylic acid; a mono- or di-aryl ester thereof; a mono- or di-acid halide thereof; and a mono-or di-acid amide thereof, a mono- or di-carboxylate salt.

In certain preferred embodiment, the polyamide comprises at least 50 mol %, preferably at least 60 mol %, more preferably at least 70 mol %, still more preferably at least 80 mol % and most preferably at least 90 mol % of recurring units ($R_{PA}$). Excellent results were obtained when the polyamide essentially consisted of recurring units ($R_{PA}$), as above detailed, which typically comply with any of formulae:

$$-NH-R^1-C(O)- \quad (I)$$

$$-NH-R^2-NH-C(O)-R^3-C(O)- \quad (II)$$

wherein $R^1$, $R^2$, $R^3$, equal to or different from each other, are divalent hydrocarbon chains, and may be aliphatic, alicyclic, cycloaliphatic, aromatic or combinations thereof, wherein $R^1$, $R^2$, $R^3$ may contain one or more than one heteroatom selected from the group consisting of O, N, S, P. The recurring units (I) and (II) of the polyamide (A) are generally characterized by a number of carbon atoms in groups $R^1$, or $R^2$ and $R^3$ per amide group of advantageously less than 18, preferably less than 16.

The polyamide may be an aliphatic polyamide polymer or an aromatic polyamide polymer.

For the purpose of the present invention, the expression "aromatic polyamide polymer" is intended to denote a polyamide which comprises more than 35 mol %, preferably more than 45 mol %, more preferably more than 55 mol %, still more preferably more than 65 mol % and most preferably more than 75 mol % of recurring units ($R_{PA}$) which are aromatic recurring units.

For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids.

For the purpose of the present invention, a dicarboxylic acid or a diamine is considered as "aromatic" when it comprises one or more than one aromatic group.

Non limitative examples of aromatic dicarboxylic acids are notably phthalic acids, including isophthalic acid (IA), terephthalic acid (TA) and orthophthalic acid (OA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, the 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid, 1,2-naphthalene dicarboxylic acid.

Among aliphatic dicarboxylic acids, mention can be notably made of oxalic acid [HOOC-COOH, malonic acid ($HOOC-CH_2-COOH$), adipic acid [$HOOC-(CH_2)_4-COOH$], succinic acid [$HOOC-(CH_2)_2-COOH$], glutaric acid [$HOOC-(CH_2)_3-COOH$], 2,2-dimethyl-glutaric acid [$HOOC-C(CH_3)_2-(CH_2)_2-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecanedioic acid [$HOOC-(CH_2)_{10}-COOH$], tetradecanedioic acid [$HOOC-(CH_2)_{11}-COOH$], cis- and/or trans-cyclohexane-1,4-dicarboxylic acid and/or cis- and/or trans-cyclohexane-1,3-dicarboxylic acid (CHDA).

According to preferred embodiments of the present invention, the dicarboxylic acid is preferably aromatic and comprises advantageously at least one phthalic acid selected from the group consisting of isophthalic acid (IA), and terephthalic acid (TA). Isophthalic acid and terephthalic acid can be used alone or in combination. The phthalic acid is preferably terephthalic acid, optionally in combination with isophthalic acid.

Non limitative examples of aliphatic diamines are typically aliphatic alkylene diamines having 2 to 18 carbon atoms, which are advantageously selected from the group consisting of 1,2-diaminoethane, 1,2-diaminopropane, propylene-1,3-diamine, 1,3-diaminobutane, 1,4-diaminobutane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-nonanediamine, 2-methyl-1,8-octanediamine, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-decanediamine, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,9-diamino-5-methylnonane, 1,11-undecanediamine and 1,12-dodecanediamine.

Also, the aliphatic diamine may be chosen from cycloaliphatic diamines such as isophorone diamine (also known as 5-amino-(1-aminomethyl)-1,3,3-trimethylcyclohexane), 1,3-cyclohexanebis(methylamine) (1,3-BAMC), 1,4-cyclohexanebis(methylamine) (1,4-BAMC), 4,4-diaminodicyclohexylmethane (PACM), and bis(4-amino-3-methylcyclohexyl)methane.

According to preferred embodiments of the present invention, the aliphatic diamine is preferably selected from the group consisting of 1,6-diaminohexane (also known as hexamethylene diamine), 1,9-nonanediamine, 2-methyl-1,8-octanediamine, 1,10-decanediamine, 1,11-undecanediamine and 1,12-dodecanediamine.

Among aromatic diamines, mention can be notably made of metaphenylene diamine (MPD), para-phenylene diamine (PPD), 3,4 '-diaminodiphenyl ether (3,4'-ODA), 4,4'-diaminodiphenyl ether (4,4'-ODA), meta-xylylene diamine (MXDA), and para-xylylene diamine (PXDA).

According to preferred embodiments of the present invention, the aromatic diamine is preferably meta-xylylene diamine (MXDA).

In addition, aromatic aminocarboxylic acids or derivatives thereof may also be used for the manufacture of the polyamide, which is generally selected from the group consisting of 4-(aminomethyl)benzoic acid and 4-aminobenzoic acid, 6-aminohexanoic acid, 1-aza-2-cyclononanone, 1-aza-2-cyclododecanone, 11-aminoundecanoic acid, 12-aminododecanoic acid, 4-(aminomethyl)benzoic acid, cis-4- (aminomethyl)cyclohexanecarboxylic acid, trans-4- (aminomethyl)cyclohexanecarboxylic acid, cis-4-aminocyclohexanecarboxylic acid and trans-4-aminocyclohexanecarboxylic acid.

Non limitative examples of polyamides are: the polymer of aliphatic dicarboxylic acid with meta-xylylene diamine (also known as PAMXD6 polymers, which are notably commercially available as IXEF® polyarylamides from Solvay Specialty Polymers U.S.A, L.L.C.), the polymers of phthalic acid, chosen among isophthalic acid (IA) and terephthalic acid (TA) and at least one aliphatic diamine (notably commercially available as AMODEL® polyphthalamides from Solvay Specialty Polymers U.S.A, L.L.C.).

The polyamide is especially selected from the group consisting of: the polymers of adipic acid with meta-xylylene diamine; the polymers of terephthalic acid with 1,9-nonanediamine; the polymers of terephthalic acid with 1,10-decanediamine; the copolymers of terephthalic acid with 1,9-nonanediamine and 2-methyl-1,8-octanediamine; the polymers of terephthalic acid with 1,12-dodecanediamine; the polymers of 1,11-undecanediamine with terephthalic acid; the copolymers of terephthalic acid and isophthalic acid with hexamethylene diamine; the copolymers of terephthalic acid with hexamethylene diamine and decamethylene diamine; the copolymers of terephthalic acid and isophthalic acid with hexamethylene diamine and decamethylene diamine; the copolymers of terephthalic acid with decamethylene diamine and 11-amino-undecanoic acid; the copolymers of terephthalic acid with hexamethylene diamine and 11-amino-undecanoic acid; the copolymer of terephthalic acid with hexamethylene diamine and bis-1,4-aminomethylcyclohexane; the copolymers of terephthalic acid with hexamethylene diamine and bis-1,3-aminomethylcyclohexane; the copolymer of hexamethylene diamine with terephthalic acid and 2,6-napthalenedicarboxylic acid; the copolymers of hexamethylene

diamine with terephthalic acid and sebacic acid; the copolymers of hexamethylene diamine with terephthalic acid and 1,12-diaminododecanoic acid; the copolymers of hexamethylene diamine with terephthalic acid, isophthalic acid and 1,4-cyclohexanedicarboxylic acid; the copolymers of decamethylene diamine with terephthalic acid and 4-aminocyclohexanecarboxylic acid; the copolymers of decamethylene diamine with terephthalic acid and 4-(aminomethyl)-cyclohexanecarboxylic acid; the polymers of decamethylene diamine with 2,6-napthalenedicarboxylic acid; the copolymers of 2,6-napthalenedicarboxylic acid with hexamethylene diamine and decamethylene diamine; the copolymers of 2,6-napthalenedicarboxylic acid with hexamethylene diamine and decamethylene diamine; the polymers of decamethylene diamine with 1,4-cyclohexanedicarboxylic acid, the copolymers of hexamethylene diamine with 11-amino-undecanoic acid and 2,6-napthalenedicarboxylic acid; the copolymers of terephthalic acid with hexamethylene diamine and 2-methylpentamethylene diamine; the copolymers of terephthalic acid with decamethylene diamine and 2-methylpentamethylene diamine; the copolymers of 2,6-napthalenedicarboxylic with hexamethylene diamine and 2-methylpentamethylene diamine; and the copolymers of 1,4-cyclohexanedicarboxylic acid with decamethylene diamine and 2-methylpentamethylene diamine.

For the purpose of the present invention, the expression "aliphatic polyamide polymer" is intended to denote a polyamide that comprises aliphatic recurring units exclusively and said aliphatic recurring units are derived from at least one aliphatic dicarboxylic acid, as mentioned above, and at least one aliphatic diamine, as mentioned above and/or said aliphatic recurring units are derived from aliphatic aminocarboxylic acids and/or aliphatic lactams.

Non limitative examples of aliphatic lactams are notably selected from the group consisting of caprolactam and lauryl lactam.

Non limitative examples of aliphatic polyamide polymer are notably selected from the group consisting of PA10,10, PA6,10, PA 11, PA 12 and PA 10,12.

In certain specific embodiment of the present invention, a blend of a first and a second polyamide may be used, and in particular the first polyamide is selected from aliphatic polyamides and the second polyamide is selected from aromatic polyamides. In such a case, the first aliphatic polyamide is preferably selected from the group consisting of PA 6, PA 6,6, PA 10,10, PA 6,10, copolyamide PA 6,6/6, PA 11, PA 12 and PA 10,12, while the second polyamide is preferably selected from polyphthalamides and PAMXD6, said second polyamide being used in an amount generally exceeding 10 % wt.

For instance, embodiments where two polyamides are combined are e.g. blends of a PAMXD6 and PA 6,6, with amount of PAMXD6 generally exceeding amount of PA 6,6; blends of a polyphthalamide and a PA6,6, with amount of polyphthalamide exceeding amount of PA6,6.

Composition (C2) may include at least one reinforcing filler. Reinforcing fillers are well known to those of skill in the art. They are preferably selected from fibrous and particulate fillers different from the pigments as described below. More preferably, the reinforcing filler is selected from mineral fillers (such as talc, mica, kaolin, calcium carbonate, calcium silicate, magnesium carbonate, boron nitride), glass fiber, carbon fibers, synthetic polymeric fiber, aramid fiber, aluminum fiber, titanium fiber, magnesium fiber, boron carbide fibers, boron nitride fibers, rock wool fiber, steel fiber, wollastonite, etc. Nano-scale reinforcing fillers can also be used. These fillers include: single and multi-wall carbon nanotubes, carbon nanofibers, graphene, graphene oxide, and nanoclays such as montmorillonite. Still more preferably, it is selected from mica, kaolin, calcium silicate, magnesium carbonate, glass fiber, carbon fibers and wollastonite.

Preferably, the filler is chosen from fibrous fillers. A particular class of fibrous fillers consists of whiskers, i.e. single crystal fibers made from various raw materials, such as $Al_2O_3$, SiC, BC, Fe and Ni.

The reinforcing filler may be chosen from wollastonite and glass fiber. Among fibrous fillers, glass fibers are preferred; they include chopped strand A-, E-, C-, D-, S-, T- and R-glass fibers, as described in chapter 5.2.3, p. 43-48 of Additives for Plastics Handbook, 2nd edition, John Murphy.

Glass fibers optionally comprised in composition (C2) may have a circular cross-section or a non-circular cross-section (such as an oval or rectangular cross-section). When the glass fibers used have a circular cross-section, they preferably have an average glass fiber diameter of 3 to 30 $\mu$m and particularly preferred of 5 to 12 $\mu$m. Different sorts of glass fibers with a circular cross-section are available on the market depending on the type of the glass they are made of. One may notably cite glass fibers made from E- or S-glass.

In some embodiments, the glass fiber is standard E-glass material with a non-circular cross section. In some aspects, the polymer composition includes S-glass fibers with a round cross-section.

In some embodiments, the composition (C2) includes at least one carbon fiber. As used herein, the term "carbon fiber" is intended to include graphitized, partially graphitized, and ungraphitized carbon reinforcing fibers or a mixture thereof. The carbon fibers can be obtained by heat treatment and pyrolysis of different polymer precursors such as, for example, rayon, polyacrylonitrile (PAN), aromatic polyamide or phenolic resin; carbon fibers may also be obtained from pitchy materials. The term "graphite fiber" is intended to denote carbon fibers obtained by high temperature pyrolysis (over 2000°C) of carbon fibers, wherein the carbon atoms place in a way similar to the graphite structure. The carbon fibers are preferably chosen from the group consisting of PAN-based carbon fibers, pitch based carbon fibers, graphite fibers, and mixtures thereof.

When a reinforcing filler is present, generally, the composition (C2) comprises less than 50 wt. %, more preferably less than 45 wt. %, even more preferably less than 42 wt. %, most preferably less than 40 wt. % of reinforcing filler, based on the total weight of composition (C2).

When a reinforcing filler is present, generally, the composition (C2) comprises at least 8 wt. %, preferably at least 10 wt. %, preferably at least 12 %, most preferably at least 15 wt. % of reinforcing filler, based on the total weight of the composition (C2).

Composition (C2) may comprise at least one additive different from the reinforcing filler and from the polyamide, as above detailed, generally selected from the group consisting of (i) colorants such as a dye (ii) pigments such as titanium dioxide, zinc sulfide and zinc oxide (iii) light stabilizers, e.g. UV stabilizers, (iv) heat stabilizers, (v) antioxidants such as organic phosphites and phosphonites, (vi) acid scavengers, (vii) processing aids, (viii) nucleating agents, (ix) internal lubricants and/or external lubricants, (x) flame retardants, (xi) smoke-suppressing agents, (x) anti-static agents, (xi) anti-blocking agents, (xii) conductivity additives such as carbon black and carbon nanofibrils, (xiii) plasticizers, (xiv) flow modifiers (xv), extenders, (xvi) metal deactivators and (xvii) flow aid such as silica.

Those additives are generally comprised in composition (C2) in amounts not exceeding 5 % wt, based on total weight of composition (C2).

Process of making the composite material

All features described above for the components of the composite material of the invention are equally features of corresponding components of the method of the present invention.

As explained above, the composite materials are manufactured by a method including forming a direct bond between first and second component by curing the said first component precursor composition [composition (C1)] while contacting the said composition (C1) with the said second component precursor composition (C2) or with the said second component. The composition (C1) is thus cured onto the second component or a precursor thereof, which creates a strong bond. Consequently, the method leads advantageously to the formation of a direct bond between the components. There is advantageously no need to add adhesives, primers, coatings or tie-layers for creating the said direct bond.

Curing of the composition (C1) is achieved by heating composition (C1) at a temperature of at least 155°C, preferably at least 160°C, more preferably of at least 165°C.

Generally, the second component is molded from composition (C2) and then contacted with composition (C1). Nonetheless methods whereas simultaneously composition (C2) is molded and composition (C1) is cured while in contact to each other are still encompassed by the scope of the invention.

The composites may be prepared in a one stage process in the same shape-giving device or in a two or multi step process in the same shape-giving device or different shape-giving devices, such as molds like, but not limited thereto, compression molds, injection molds or combinations thereof. For example the composition (C2) including the polyamide may be shaped in a mold and then the composition (C1) may be transferred to the shaped polyamide-containing part and then cured onto it. This can be carried out in the same mold or in different molds. It is also contemplated that the first and second component are joined and the first component is cured while the first and second components are shaped simultaneously, which offers an economical advantage.

However, the components may also be pre-shaped and then subjected to heating for effecting curing of composition (C1) while contacting the pre-shaped precursors.

For achieving best results, when polyamide is a semi-crystalline polyamide, possessing ability to crystallize, it is preferable for the second component, in its molded form, to satisfy the following inequality when contacted with composition (C1) for effecting curing:

$$(\Delta H_f - \Delta H_c) \times f_{PA} \leq 25 \text{ J/g}$$

wherein:

- $\Delta H_f$ is the heat of fusion, measured by DSC, as determined on the 1st heating cycle, at a heating rate of 20°C/min;
- $\Delta H_c$ is the heat of crystallization, measured by DSC, as determined on the 1st cooling cycle, at a cooling rate of 20°C/min; and
- $f_{PA}$ is the polyamide weight fraction in the said second component.

Without being bound by this theory, the Applicant believes that contacting composition (C1) with second component whereas the polyamide is already substantially in its crystallized form is beneficial for improving interfacial adhesion. On the opposite, when above referred inequality is not satisfied, it means that the polyamide potential crystallization has not fully taken place in the second component before contacting with composition (C1): crystallization phenomena may hence take place during the curing of composition (C1) with possible detrimental effects on interfacial adhesion.

Preferably, the second component, or at least the surface of the second component that is to contact the composition (C1) is brought to an increased temperature before contacting and curing the said composition (C1). More preferably, the second component or the surface to be contacting the composition (C1) is brought to about the same temperature that is used to cure the composition (C1) and preferably is maintained at that temperature during the curing. Preferably the temperature is a temperature at which the second component is still solid, or in other term is a temperature which is below the melting point of the polyamide of the said second component, when the said polyamide is semi-crystalline or is a temperature which is below the glass transition temperature of the polyamide of the said second component, when the said polyamide is amorphous.

Typically, the temperature is below the HDT (at a load of 1.8 MPa or 0.45 MPa) of the second component. Typically, the second component is brought to at least about 100°C, preferably to at least 130 °C and most preferably to at least 160°C. Typically, the second component is brought to a temperature above 170 °C but below 230 °C before and during contacting and curing the composition (C1). It may be sufficient to bring the surface of the second component to the above temperature and not the entire polyamide resin.

Because the bond is generated directly through contact of the components during the curing reaction no adhesive materials, coatings or primers have to be added to the components or to the surface of the components at which a bond is to be created. Examples of adhesives or primers and coating include like epoxy resins or monomers, acrylic resins or monomers, like liquid (25 degrees centigrade, 1 bar) or solid amines or polyamines (typically having a molecular weight of less than 2,000 mole), liquid or solid phosphates phosphates additional polymers need to be added. This offers an economical advantage.

After curing the composites may be subjected to further shaping steps.

The bonded composites are preferably subjected to a post cure treatment by subjecting them, for example in a hot air oven or nitrogen oven, to a temperature of 200 °C to 260 °C, for example, for a period of from about 4 to about 24 hrs.

The composite materials may be shaped into articles or into components of a shaped article. Preferably, the article is exposed to a fuel or fumes thereof. The fuel is typically a fuel for a combustion engine, for example of a motor vehicle, like a car, an aircraft, a water craft or an airplane. Examples include liquid hydrocarbons or hydrocarbon mixtures, like kerosene, petrol and diesel. Other examples include liquefied hydrocarbons, like liquefied propene, butane or liquefied natural gas.

Such articles typically include seals or components of a seal. Preferably the fluoroelastomer component of such article is or becomes exposed to the fuel or its fumes.

The composite materials may be used in seals exposed to acids; bases; $H_2S$; crude oils; gasses like methane, propane, butane, hydrogen, air, chlorine, ammonia nitrogen, argon, carbon dioxide, carbon mono oxide, natural and liquefied gases like LNG, SNG, LPG, CNG; solvents like methanol; methyl tertiary butylether; steam; water; drilling muds and completion fluids.

For example, the above-mentioned composite materials can be used in sealing materials such as gaskets and contact or non-contact packing materials, which require heat resistance, oil resistance, fuel oil resistance, resistance to anti-freeze used for engine cooling and steam resistance, in engine bodies, main driving systems, valve systems, lubricating/cooling systems, fuel systems, air intake/discharge systems for automotive engines; transmission systems for drive systems; chassis steering systems; braking systems; basic electrical components of electrical equipment, electrical components of control systems and electrical components of accessories (self-sealing packing, piston rings, split ring type packing, mechanical seals and oil seals).

Sealing materials used in engine bodies for automotive engines are not particularly limited, but can be, for example, sealing materials such as cylinder head gaskets, cylinder head cover gaskets, oil pan packing, ordinary gaskets, O-rings, packing and timing belt cover gaskets.

Sealing materials used in main driving systems for automotive engines are not particularly limited, but can be, for example, crankshaft seals or camshaft seals.

Sealing materials used in valve systems for automotive engines are not particularly limited, but can be, for example, valve stem oil seals for engine valves and valve seats for butterfly valves.

Sealing materials used in lubricating/cooling systems for automotive engines are not particularly limited, but can be, for example, sealing gaskets for engine oil coolers.

Sealing materials used in fuel systems for automotive engines are not particularly limited, but can be, for example, oil seals for fuel pumps, filler seals for fuel tanks and tank packing, connector O-rings for fuel tubes, injector concussion rings for fuel injection systems, injector seal rings and injector O rings, flange gaskets for carburetors and EGR sealing materials.

Sealing materials used in air intake/discharge systems for automotive engines are not particularly limited, but can be, for example, intake manifold packing, exhaust manifold packing, throttle body packing and turbocharger turbine

shaft packing.

Sealing materials used in transmission systems for automotive engines are not particularly limited, but can be, for example, transmission-related bearing seals, oil seals, O-rings and packing and the like, and O-rings and packing for automatic transmission systems.

Sealing materials used in automotive braking systems are not particularly limited, but can be, for example, oil seals, O-rings, packing and the like, piston cups (rubber cups) for master cylinders and the like, caliper seals, boots and the like.

Sealing materials used in automotive electrical components are not particularly limited, but can be, for example, O-rings and packing for vehicle air conditioning systems.

Applications in fields other than the automotive field are not particularly limited, and the composite material can be widely used in sealing materials in various fields such as aviation, rockets, ships, oil well drilling (for example, packer seals, MWD seals, LWD seals and the like), chemical plants, pharmaceutical applications, photographic applications such as developers, printing applications such as printing equipment, coating applications such as coating equipment, analytical/scientific instruments, food processing plant equipment, atomic power plant equipment, iron and steel-related applications such as iron plate processing equipment, general industrial applications, electrical applications, fuel cells, electronic components and molding applications such as on-site construction molds.

For example, the sealing material can be oil-resistant, chemical-resistant, heat-resistant, steam-resistance or weathering-resistant packing, O-rings or other sealing materials in transport-related fields such as shipping or aviation; similar packing, O-rings or sealing materials in the field of oil well drilling; similar packing, O-rings or sealing materials in the field of chemical plants; similar packing, O-rings or sealing materials in the fields of food processing plant equipment and food processing equipment (including domestic equipment); similar packing, O-rings or sealing materials in the field of atomic power plant equipment; and similar packing, O-rings or sealing materials in the field of general industrial equipment.

The invention will be now be described in connection with the following examples whose purpose is merely illustrative and not intended to limit the scope of the invention.

## EXAMPLES

### Raw materials

TECNOFLON® N535 is a VDF-based fluoroelastomer, having a fluorine content of 66 % wt, commercially available from Solvay Specialty Polymers Italy, S.p.A.

TECNOFLON® FOR TF 838K is a cure-incorporated VDF-based fluoroelastomer, including polyhydroxylated compound and onium salt, having a fluorine content of 68 % wt, and a chlorine content of 0.3-0.4 % wt (corresponding to about 0.9-1.2 % wt of CTFE), (TF 838K, herein after), commercially available from Solvay Specialty Polymers Italy, S.p.A.

TECNOFLON® FOR M1 is a masterbatch made of appr. 50.0 % wt of an elastomeric VDF/HFP copolymer and appr. 50.0 % wt of 4,4'-[2,2,2-trifluoro-1-(trifluoromethyl)ethylidene]bisphenol (FOR M1, herein after), commercially available from Solvay Specialty Polymers Italy, S.p.A.

TECNOFLON® FOR M2 is a masterbatch made of appr. 70.0 % wt of an elastomeric VDF/HFP copolymer and appr. 30.0 % wt of Benzyl (diethylamino) diphenyl phosphonium chloride (FOR M2, herein after), commercially available from Solvay Specialty Polymers Italy, S.p.A.

Fluoroelastomer Copolymer Gum F2311Q is an amorphous vinylidene fluoride-chlorotrifluoroethylene rubber, having a chlorine content of 19.1-20.2% wt (corresponding to 55-58%wt of CTFE units) (F2311Q, hereinafter), supplied from Chenguang Research Institute.

Reinforcing filler Carbon black N990MT was obtained from Cancarb (N990 MT, hereinafter).

MAGLITE® DE high surface area, high activity magnesium oxide (Maglite® DE, herein after) was obtained from Merck.

Rhenofit® CF (GE 1890) calcium hydroxide was obtained from Rhein Chemie.

Rilsamid® PA12 is a semi-crystalline polyamide possessing a melting temperature of 178°C

Grilamid® TR90 PA is an amorphous thermoplastic polyamide based on aliphatic and cycloaliphatic units, having a glass transition temperature of 155°C and a HDT (at 0.45 MPa) of 135°C.

AMODEL® A1004 (non-reinforced) and AT 1116 HS NT, AS 1933 HS BK324, AS 4133 HS BK324, A-6135 HN BK-324, AE-8930 BK939 PPA (reinforced) are polyphthalamides commercially available from Solvay Specialty Polymers USA, LLC.

RYTON® QA200N PPS is a polyphenylene sulphide polymer comercially available from Solvay Specialty Polymers USA, LLC.

## Fluororubber precursor composition preparation

Fluororubber precursors were compounded with the additives as detailed in following table in an open mill at a temperature of below 40°C for 10 minutes.

**Table 1**

| | | Ex.1 | Ex. 2 | Ex. 3 | Ex. 4 | Ex. 5C | Ex. 6C | Ex. 7 |
|---|---|---|---|---|---|---|---|---|
| N 535 | phr | 100.00 | 100.00 | 100.00 | 100.00 | 100.00 | - | - |
| TF 838K | phr | - | - | - | - | - | - | 100.00 |
| N990 MT | phr | 30.00 | 30.00 | 30.00 | 30.00 | 30.00 | 30.00 | 30.00 |
| F2311Q | phr | 2.00 | 5.00 | 10.00 | 20.00 | - | 100.0 0 | 100.0 - |
| FOR M1 | phr | 4.00 | 4.00 | 4.00 | 4.00 | 4.00 | 4.00 | - |
| FOR M2 | phr | 1.50 | 1.50 | 1.50 | 1.50 | 1.50 | 1.50 | - |
| Maglite DE | phr | 3.00 | 3.00 | 3.00 | 3.00 | 3.00 | 3.00 | 3.00 |
| Rhenofit CF | phr | 6.00 | 6.00 | 6.00 | 6.00 | 6.00 | 6.00 | 6.00 |

## Polyamide substrates preparation

Polyamides were dried under vacuum and injection molded to produce Ross flex specimens (125 (L) x 25 (W) x 3.2 (D) mm) using a Sumitomo SE75EV Injection Molding Machine equipment. The so-obtained stripeshaped specimen was cleaned with isopropanol, and after drying, half of its surface was masked with PTFE tape. Processing conditions are summarized in table below.
Similar procedure was followed for preparing a comparative PPS specimen. Properties of polyamide substrates and of PPS substrate are summarized in Table below, wherein GF is the %wt of glass fibers and $f_{PA}$ is the weight fraction of polyamide/PPS; $T_m$ is the melting point and $\Delta H_f$ is the heat of fusion, both determined during 1$^{st}$ heating cycle (at 20°C/min), and $\Delta H_c$ is the heat of crystallization, determined during 1$^{st}$ cooling cycle (at 20°C/min), whereas thermal properties have been determined on a specimen taken from the injection molded substrate.

**Table 2**

| | A-1004 | Filled A (*) | PA12 | TR-90 | QA200N |
|---|---|---|---|---|---|
| Drying T(°C) | 110 | 110 | 90 | 100 | 100 |
| Barrel T (°C) | 330-310 | 340-310 | 230-200 | 270-250 | 300-260 |
| Mold T (°C) | 150 | 150 | 30-20 | 90 | 130 |
| Inject P (bar) | 900 | 1200-800 | 900 | 1000 | 800 |
| Hold P (bar) | 600-400 | 800-500 | 900-700 | 800-600 | 600-400 |
| Hold t (sec) | 10-8 | 10-8 | 8-6 | 10-8 | 14-10 |
| Screw (rpm) | 100 | 100-60 | 100 | 100 | 60 |
| Back P (bar) | 70 | 60-50 | 80 | 80 | 50 |
| (*) AT 1116 HS NT, AS 1933 HS BK324, AS 4133 HS BK324, A-6135 HN BK-324, and AE-8930 BK939 | | | | | |

**Table 3**

| Polyamide | GF (%wt.) | $f_{PA}$ | Tm (°C) | $\Delta H_f$ (J/g) | $\Delta H_c$ (J/g) | $(\Delta H_f-\Delta H_c)$x $f_{PA}$ (J/g) |
|---|---|---|---|---|---|---|
| A-1004 | 0 | 1 | 322 | 45.3 | 39.7 | 5.6 |
| AT 1116 HS NT | 16 | 0.84 | 313 | 33.8 | 27.2 | 5.5 |
| AS 1933 HS BK 324 | 33 | 0.67 | 321 | 24.4 | 23 | 0.9 |

(continued)

| Polyamide | GF (%wt.) | $f_{PA}$ | Tm (°C) | $\Delta H_f$ (J/g) | $\Delta H_c$ (J/g) | $(\Delta H_f - \Delta H_c) x f_{PA}$ (J/g) |
|---|---|---|---|---|---|---|
| AS 4133 HS BK 324 | 33 | 0.67 | 327 | 28.7 | 25.3 | 2.3 |
| A-6135 HN BK 324 | 35 | 0.65 | 312 | 29.6 | 27.8 | 1.2 |
| AE-8930 BK 938 | 30 | 0.7 | 325 | 35.7 | 25.8 | 6.9 |
| TR90 | 0 | 1 | - | - | - | NA |
| PA12 | 0 | 1 | 177 | 58 | 56.7 | 1.3 |
| QA200N | 0 | 1 | 279 | 38.9 | 47.7 | -8.8 |

## Manufacture of composite material by overmolding

Composite materials were manufactured by compression molding at 170° C. The substrates were placed as the bottom layer in the mold of the compression molding apparatus and pre-heated at a temperature of 170°C for 15 minutes; required amount of fluororubber precursor composition was then spread on the top of the substrates and compressed for 10 minutes at 170°C. The composite materials, once removed from the mold, in certain instances, were post-cured in an air-circulating oven at a temperature of 230°C for 4 hours.

Peel strength was measured using a Zwick Roll UTM device from a 90° adhesion test, carried out according to ASTM D429. Adhesion failure were categorized among "cohesive" failures, when the failure occurred as fracture of the fluororubber component, "adhesive" failures when the fluororubber component cleanly separated from the surface of the polyamide component, and "mixed" failures when a mixed-mode of above failures was observed. Solely "cohesive" failures are representative of achievement of good interfacial adhesion in the composite material.

Results are summarized in tables below:

**Table 4**

| Run | PA | Rubber | % wt. Cl | Post cure | Type of failure | Max Adhesion Force (N/mm) |
|---|---|---|---|---|---|---|
| A | A1004 | Ex. 1 | 0.4 | No | Cohesive | 5.24 ± 0.38 |
| B | A1004 | Ex. 2 | 0.9 | No | Cohesive | 8.15 ± 0.47 |
| C | A1004 | Ex. 2 | 0.9 | Yes | Cohesive | 6.80 ± 1.2 |
| D | A1004 | Ex. 3 | 1.8 | No | Cohesive | 8.00 ± 0.72 |
| E | A1004 | Ex. 4 | 3.3 | No | Cohesive | 7.47 ± 0.83 |
| F (comp.) | A1004 | Ex. 5c | 0.0 | Yes | Mixed adhesion | 5.87± 0.61 |
| G (comp.) | A1004 | Ex. 5c | 0.0 | No | Mixed adhesion | 5.35± 1.15 |
| H (comp.) | A1004 | Ex. 6c | ~ 20 | Yes | Poor adhesion | n.a. |

**Table 5**

| Run | Polyamide (or PPS) | Rubb er | % wt. Cl | Post cure | Type of failure | Max Adhesion Force (N/mm) |
|---|---|---|---|---|---|---|
| J | AT 1116 HS NT | Ex.2 | 0.9 | yes | Cohesive | 6.73 ± 0.82 |
| I | AS 1933 HS BK324 | Ex.2 | 0.9 | yes | Cohesive | 5.85 ± 1.09 |
| L | AS 4133 HS BK324 | Ex.2 | 0.9 | yes | Cohesive | 6.52 ± 1.04 |
| M | A-6135 HN BK 324 | Ex.2 | 0.9 | yes | Cohesive | 5.05 ± 0.52 |

(continued)

| Run | Polyamide (or PPS) | Rubb er | % wt. Cl | Post cure | Type of failure | Max Adhesion Force (N/mm) |
|---|---|---|---|---|---|---|
| N | AE-8930 BK 938 | Ex.2 | 0.9 | yes | Cohesive | 5.27 ± 1.4 |
| O | A1004 | Ex.7 | 0.4 | yes | Cohesive | 5.65± 0.34 |
| P | AT 1116 HS NT | Ex.7 | 0.4 | yes | Cohesive | 5.89 ± 0.60 |
| Q (comp.) | AT 1116 HS NT | Ex.6c | ~20 | Yes | Mixed adhesion | 2.79 ± 0.83 |
| R | AS 1933 HS BK 324 | Ex.7 | 0.4 | yes | Cohesive | 5.00 ± 0.87 |
| S | AS 4133 HS BK 324 | Ex.7 | 0.4 | yes | Cohesive | 6.22 ± 1.12 |
| T | A-6135 HN BK 324 | Ex.7 | 0.4 | yes | Cohesive | 4.65 ± 1.2 |
| U (comp.) | QA200N | Ex.2 | 0.9 | Yes | No adhesion | N.A. |
| V (comp.) | QA200N | Ex.5c | 0 | Yes | No adhesion | N.A. |

Data comprised in tables above show that a proper adhesion between the polyamide component and the fluoroelastomer component can be achieved when practicing the invention; when the amount of chlorotrifluoroethylene units in the fluororubber precursor exceeds the claimed boundaries, as well as when the fluororubber is free from any chlorotrifluoroethylene unit, adhesion is unsatisfactory, and failures in peel tests are not cohesive. Further, data collected above, clearly show that the advantageous effect is not achieved when using a thermoplastic component other than a polyamide component (see PPS negative results above).

## Claims

**1.** A composite material comprising a first component directly bonded to a second component, wherein:

- the first component is a cured fluoroelastomer component, obtained from curing a first component precursor composition [composition (C1)] comprising:
- at least one fluororubber precursor selected from the group consisting of:

(i) a blend of:

(A) at least one vinylidene fluoride based fluoroelastomer comprising recurring units derived from vinylidene fluoride (VDF) and from at least one additional (per)fluorinated monomer different from VDF [fluoroelastomer (A)]; and
(B) at least one chlorotrifluoroethylene-containing polymer additive [additive (B)] different from fluoroelastomer (A);

(ii) at least one Cl-modified vinylidene fluoride based fuoroelastomer comprising recurring units derived from VDF, recurring units derived from chlorotrifluoroethylene, and at least one additional (per)fluorinated monomer different from VDF and CTFE [fluoroelastomer (A')]; and
(iii) mixtures thereof;

wherein the said fluororubber precursor has an overall content of chlorine ranging from 0.2 to 5.0% wt, based on the total weight of fluororubber precursor;
- at least one polyhydroxylated compound [compound (OH)];
- at least one accelerant [accelerant (A)] selected from the group consisting of organic P, As, Se or S-onium compound, amino-phosphonium derivatives, phosphoranes, and diphosphine-iminium compounds;

and

- the second component is a component molded from a second component precursor composition [composition (C2)] comprising at least one polyamide resin in an amount of at least 50 % wt, based on the total weight of composition (C2).

**2.** The composite material of Claim 1, wherein fluoroelastomers (A) and (A') comprise at least 15 % moles, preferably at least 20 % moles, more preferably at least 35 % moles of recurring units derived from VDF, with respect to all recurring units of the fluoroelastome; and/or comprise at most 85 % moles, preferably at most 80 % moles, more preferably at most 78 % moles of recurring units derived from VDF, with respect to all recurring units of the fluoroelastomer (A) or (A').

**3.** The composite material of anyone of the preceding claims, wherein additive (B) comprises recurring units derived from CTFE in an amount of more than 5 % moles, preferably of at least 10 % moles, even more preferably of at least 15 % moles and/or in an amount of at most 75 % moles, preferably at most 70 % moles, even more preferably at most 65 % moles, with respect to the total moles of additive (B), and wherein preferably additive (B) is a copolymer of CTFE and VDF, comprising from 54 to 60 % moles of recurring units derived from CTFE, with respect to the total moles of recurring units of additive (B), the remaining recurring units of additive (B) being VDF units.

**4.** The composite material of anyone of the preceding claims, wherein the fluororubber precursor is a blend of fluoroelastomer (A) and additive (B), and wherein the amount of additive (B) is of at least 1 phr, preferably at least 2 phr, more preferably at least 3 phr and/or at most 25 phr, preferably at most 20 phr, based on 100 weight parts of fluoroelastomer (A).

**5.** The composite material according to anyone of the preceding claims, wherein the polyamide comprises at least 50 mol %, preferably at least 60 mol %, more preferably at least 70 mol %, still more preferably at least 80 mol % and most preferably at least 90 mol % of recurring units ($R_{PA}$) of formulae:

$$-NH-R^1-C(O)- \qquad (I)$$

$$-NH-R^2-NH-C(O)-R^3-C(O)- \qquad (II)$$

wherein $R^1$, $R^2$, $R^3$, equal to or different from each other, are divalent hydrocarbon chains, and may be aliphatic, alicyclic, cycloaliphatic, aromatic or combinations thereof, wherein $R^1$, $R^2$, $R^3$ may contain one or more than one heteroatom selected from the group consisting of O, N, S, P.

**6.** The composite material according to Claim 5, wherein the polyamide is selected from the group consisting of: the polymers of adipic acid with meta-xylylene diamine; the polymers of terephthalic acid with 1,9-nonanediamine; the polymers of terephthalic acid with 1,10-decanediamine; the copolymers of terephthalic acid with 1,9-nonanediamine and 2-methyl-1,8-octanediamine; the polymers of terephthalic acid with 1,12-dodecanediamine; the polymers of 1,11-undecanediamine with terephthalic acid; the copolymers of terephthalic acid and isophthalic acid with hexamethylene diamine; the copolymers of terephthalic acid with hexamethylene diamine and decamethylene diamine; the copolymers of terephthalic acid and isophthalic acid with hexamethylene diamine and decamethylene diamine; the copolymers of terephthalic acid with decamethylene diamine and 11-amino-undecanoic acid; the copolymers of terephthalic acid with hexamethylene diamine and 11-amino-undecanoic acid; the copolymer of terephthalic acid with hexamethylene diamine and bis-1,4-aminomethylcyclohexane; the copolymers of terephthalic acid with hexamethylene diamine and bis-1,3-aminomethylcyclohexane; the copolymer of hexamethylene diamine with terephthalic acid and 2,6-napthalenedicarboxylic acid; the copolymers of hexamethylene diamine with terephthalic acid and sebacic acid; the copolymers of hexamethylene diamine with terephthalic acid and 1,12-diaminododecanoic acid; the copolymers of hexamethylene diamine with terephthalic acid, isophthalic acid and 1,4-cyclohexanedicarboxylic acid; the copolymers of decamethylene diamine with terephthalic acid and 4-aminocyclohexanecarboxylic acid; the copolymers of decamethylene diamine with terephthalic acid and 4-(aminomethyl)-cyclohexanecarboxylic acid; the polymers of decamethylene diamine with 2,6-napthalenedicarboxylic acid; the copolymers of 2,6-napthalenedicarboxylic acid with hexamethylene diamine and decamethylene diamine; the copolymers of 2,6-napthalenedicarboxylic acid with hexamethylene diamine and decamethylene diamine; the polymers of decamethylene diamine with 1,4-cyclohexanedicarboxylic acid, the copolymers of hexamethylene diamine with 11-amino-undecanoic acid and 2,6-napthalenedicarboxylic acid; the copolymers of terephthalic acid with hexamethylene diamine and 2-methylpentamethylene diamine; the copolymers of terephthalic acid with decamethylene diamine and 2-methylpentamethylene diamine; the copolymers of 2,6-napthalenedicarboxylic with hexamethylene diamine and 2-methylpentamethylene diamine; and the copolymers of 1,4-cyclohexanedicarboxylic acid with decamethylene diamine and 2-methylpentamethylene diamine.

**7.** A method of making a composite material comprising:

i) providing

a) a fist component precursor composition comprising a fist component precursor composition [composition (C1)] comprising:

- at least one fluororubber precursor selected from the group consisting of:

(i) a blend of:

(A) at least one vinylidene fluoride based fluoroelastomer comprising recurring units derived from vinylidene fluoride (VDF) and from at least one additional (per)fluorinated monomer different from VDF [fluoroelastomer (A)]; and
(B) at least one chlorotrifluoroethylene-containing polymer additive [additive (B)] different from fluoroelastomer (A);

(ii) at least one Cl-modified vinylidene fluoride based fuoroelastomer comprising recurring units derived from VDF, recurring units derived from chlorotrifluoroethylene, and at least one additional (per)fluorinated monomer different from VDF and CTFE [fluoroelastomer (A')]; and
(iii) mixtures thereof;
wherein the said fluororubber precursor has an overall content of chlorine ranging from 0.2 to 5.0% wt, based on the total weight of fluororubber precursor;

- at least one polyhydroxylated compound [compound (OH)];
- at least one accelerant [accelerant (A)] selected from the group consisting of organic P, As, Se or S-onium compound, amino-phosphonium derivatives, phosphoranes, and diphosphine-iminium compounds;
b) a second component precursor composition (C2) comprising at least one polyamide in an amount of at last 50 % wt, based on the total weight of composition (C2);

(ii) providing first component by curing composition (C1) and second component by molding composition (C2),
wherein the method comprises forming a direct bond between first and second component by curing the said first component precursor composition (C1) while contacting the first component precursor component (C1) with the said second component precursor composition (C2) or with the said second component.

**8.** The method of Claim 7, wherein curing of the composition (C1) is achieved by heating composition (C1) at a temperature of at least 155°C, preferably at least 160°C, more preferably of at least 165°C.

**9.** The method of Claim 7 to 8, wherein the polyamide is a semi-crystalline polyamide, and wherein the second component, in its molded form, satisfies the following inequality when contacted with composition (C1) for effecting curing:

$$(\Delta H_f - \Delta H_c) \times f_{PA} \leq 25 \text{ J/g}$$

wherein:

$\Delta H_f$ is the heat of fusion, measured by DSC, as determined on the 1st heating cycle, at a heating rate of 20°C/min;
$\Delta H_c$ is the heat of crystallization, measured by DSC, as determined on the 1st cooling cycle, at a cooling rate of 20°C/min; and
$f_{PA}$ is the polyamide weight fraction in the said second component.

**10.** The method of anyone of Claims 7 to 9, wherein the second component, or at least the surface of the second component that is to contact the composition (C1), is brought to an increased temperature before contacting and curing the said composition (C1).

11. A shaped article comprising the composite material according to anyone of Claims 1 to 7 or manufactured from the method of anyone of Claims 7 to 10.

12. Use of the composite material according to anyone of Claims 1 to 6 or manufactured from the method of anyone of Claims 7 to 10 in sealing materials such as gaskets and contact or non-contact packing materials, which require heat resistance, oil resistance, fuel oil resistance, resistance to anti-freeze used for engine cooling and steam resistance, in engine bodies, main driving systems, valve systems, lubricating/cooling systems, fuel systems, air intake/discharge systems for automotive engines; transmission systems for drive systems; chassis steering systems; braking systems; basic electrical components of electrical equipment, electrical components of control systems, electrical components of accessories.

13. Use of the composite material according to anyone of Claims 1 to 6 or manufactured from the method of anyone of Claims 7 to 10 in sealing materials in fields selected from aviation, rockets, ships, oil well drilling, chemical plants, pharmaceutical applications, photographic applications such as developers, printing applications such as printing equipment, coating applications such as coating equipment, analytical/scientific instruments, food processing plant equipment, atomic power plant equipment, iron and steel-related applications such as iron plate processing equipment, general industrial applications, electrical applications, fuel cells, electronic components and molding applications such as on-site construction molds.

**Patentansprüche**

1. Verbundmaterial, umfassend eine erste Komponente, die direkt an eine zweite Komponente gebunden ist, wobei:

   - die erste Komponente eine gehärtete Fluorelastomer-Komponente ist, die durch Härten einer ersten Komponentenvorläuferzusammensetzung [Zusammensetzung (C1)] erhalten wird, umfassend:
   - mindestens einen Fluorkautschuk-Vorläufer, ausgewählt aus der Gruppe bestehend aus:

     (i) einer Mischung aus:

       (A) mindestens einem auf Vinylidenfluorid basierenden Fluorelastomer, das wiederkehrende Einheiten umfasst, die von Vinylidenfluorid (VDF) und von mindestens einem zusätzlichen (per)fluorierten Monomer, das von VDF verschieden ist, abgeleitet sind, [Fluorelastomer (A)]; und
       (B) mindestens einem Chlortrifluorethylen enthaltenden Polymeradditiv [Additiv (B)], das von Fluorelastomer (A) verschieden ist;

     (ii) mindestens einem Cl-modifizierten auf Vinylidenfluorid basierenden Fluorelastomer, das wiederkehrende Einheiten, die von VDF abgeleitet sind, wiederkehrende Einheiten, die von Chlortrifluorethylen abgeleitet sind, und mindestens ein zusätzliches (per)fluoriertes Monomer, das von VDF und CTFE verschieden ist, umfasst, [Fluorelastomer (A')]; und
     (iii) Gemischen davon;

   wobei der Fluorkautschuk-Vorläufer einen Gesamtgehalt an Chlor im Bereich von 0,2 bis 5,0 Gew.-%, bezogen auf das Gesamtgewicht an Fluorkautschuk-Vorläufer, umfasst;
   - mindestens eine polyhydroxylierte Verbindung [Verbindung (OH)];
   - mindestens einen Beschleuniger [Beschleuniger (A)], der ausgewählt ist aus der Gruppe bestehend aus organischer P-, As-, Se- oder S-Onium-Verbindung, Aminophosphonium-Derivaten, Phosphoranen und Diphosphiniminium-Verbindungen;
   und
   - die zweite Komponente eine Komponente ist, die aus einer zweiten Komponentenvorläuferzusammensetzung [Zusammensetzung (C2)] geformt ist, die mindestens ein Polyamid-Harz in einer Menge von mindestens 50 Gew.-%, bezogen auf das Gesamtgewicht der Zusammensetzung (C2), umfasst.

2. Verbundmaterial nach Anspruch 1, wobei die Fluorelastomere (A) und (A') zu mindestens 15 Mol.-%, vorzugsweise mindestens 20 Mol.-%, besonders bevorzugt mindestens 35 Mol.-% wiederkehrende Einheiten, die von VDF abgeleitet sind, in Bezug auf alle wiederkehrenden Einheiten der Fluorelastomere umfassen; und/oder zu höchstens 85 Mol.-%, vorzugsweise höchstens 80 Mol.-%, besonders bevorzugt höchstens 78 Mol.-% wiederkehrende Einheiten, die von VDF abgeleitet sind, in Bezug auf alle wiederkehrenden Einheiten des Fluorelastomers (A) oder (A') umfassen.

3. Verbundmaterial nach einem der vorstehenden Ansprüche, wobei Additiv (B) wiederkehrende Einheiten, die von CTFE abgeleitet sind, in einer Menge von mehr als 5 Mol.-%, vorzugsweise mindestens 10 Mol.-%, ganz besonders bevorzugt von mindestens 15 Mol.-% und/oder in einer Menge von höchstens 75 Mol.-%, vorzugsweise höchstens 70 Mol.-%, ganz besonders bevorzugt höchstens 65 Mol.-% in Bezug auf die Gesamtmole von Additiv (B) umfasst und wobei vorzugsweise Additiv (B) ein Copolymer von CTFE und VDF ist, umfassend zu 54 bis 60 Mol.-% wiederkehrende Einheiten, die von CTFE abgeleitet sind, in Bezug auf die Gesamtmole an wiederkehrenden Einheiten von Additiv (B), wobei die übrigen wiederkehrenden Einheiten von Additiv (B) VDF-Einheiten sind.

4. Verbundmaterial nach einem der vorstehenden Ansprüche, wobei der Fluorkautschuk-Vorläufer eine Mischung aus Fluorelastomer (A) und Additiv (B) ist und wobei die Menge an Additiv (B) mindestens 1 phr, vorzugsweise mindestens 2 phr, besonders bevorzugt mindestens 3 phr und/oder höchstens 25 phr, vorzugsweise höchstens 20 phr, bezogen auf 100 Gewichtsteile Fluorelastomer (A), beträgt.

5. Verbundmaterial nach einem der vorstehenden Ansprüche, wobei das Polyamid zu mindestens 50 Mol.-%, vorzugsweise mindestens 60 Mol.-%, besonders bevorzugt mindestens 70 Mol.-%, insbesondere bevorzugt mindestens 80 Mol.-% und am meisten bevorzugt mindestens 90 Mol.-% wiederkehrende Einheiten ($R_{PA}$) der folgenden Formeln umfasst:

$$-NH-R^1-C(O)- \qquad (I)$$

$$-NH-R^2-NH-C(O)-R^3-C(O)- \qquad (II)$$

wobei $R^1$, $R^2$, $R^3$, gleich oder voneinander verschieden sind, zweiwertige Kohlenwasserstoffketten sind und aliphatisch, alicyclisch, cycloaliphatisch, aromatisch oder Kombinationen davon sind, wobei $R^1$, $R^2$, $R^3$ ein oder mehr als ein Heteroatom, ausgewählt aus der Gruppe bestehend aus O, N, S, P, enthalten können.

6. Verbundmaterial nach Anspruch 5, wobei das Polyamid ausgewählt ist aus der Gruppe bestehend aus: den Polymeren von Adipinsäure mit Metaxylylendiamin; den Polymeren von Terephthalsäure mit 1,9-Nonandiamin; den Polymeren von Terephthalsäure mit 1,10-Decandiamin; den Copolymeren von Terephthalsäure mit 1,9-Nonandiamin und 2-Methyl-1,8-octandiamin; den Polymeren von Terephthalsäure mit 1,12-Dodecandiamin; den Polymeren von 1,11-Undecandiamin mit Terephthalsäure; den Copolymeren von Terephthalsäure und Isophthalsäure mit Hexamethylendiamin; den Copolymeren von Terephthalsäure mit Hexamethylendiamin und Decamethylendiamin; den Copolymeren von Terephthalsäure und Isophthalsäure mit Hexamethylendiamin und Decamethylendiamin; den Copolymeren von Terephthalsäure mit Decamethylendiamin und 11-Aminoundecansäure; den Copolymeren von Terephthalsäure mit Hexamethylendiamin und 11-Aminoundecansäure; dem Copolymer von Terephthalsäure mit Hexamethylendiamin und Bis-1,4-aminomethylcyclohexan; den Copolymeren von Terephthalsäure mit Hexamethylendiamin und Bis-1,3-aminomethylcyclohexan; dem Copolymer von Hexamethylendiamin mit Terephthalsäure und 2,6-Naphthalindicarbonsäure; den Copolymeren von Hexamethylendiamin mit Terephthalsäure und Sebacinsäure; den Copolymeren von Hexamethylendiamin mit Terephthalsäure und 1,12-Diaminododecansäure; den Copolymeren von Hexamethylendiamin mit Terephthalsäure, Isophthalsäure und 1,4-Cyclohexandicarbonsäure; den Copolymeren von Decamethylendiamin mit Terephthalsäure und 4-Aminocyclohexancarbonsäure; den Copolymeren von Decamethylendiamin mit Terephthalsäure und 4-(Aminomethyl)cyclohexancarbonsäure; den Polymeren von Decamethylendiamin mit 2,6-Naphthalindicarbonsäure; den Copolymeren von 2,6-Naphthalindicarbonsäure mit Hexamethylendiamin und Decamethylendiamin; den Copolymeren von 2,6-Naphthalindicarbonsäure mit Hexamethylendiamin und Decamethylendiamin; den Polymeren von Decamethylendiamin mit 1,4-Cyclohexandicarbonsäure, den Copolymeren von Hexamethylendiamin mit 11-Aminoundecansäure und 2,6-Naphthalindicarbonsäure; den Copolymeren von Terephthalsäure mit Hexamethylendiamin und 2-Methylpentamethylendiamin; den Copolymeren von Terephthalsäure mit Decamethylendiamin und 2-Methylpentamethylendiamin; den Copolymeren von 2,6-Naphthalindicarbonsäure mit Hexamethylendiamin und 2-Methylpentamethylendiamin; und den Copolymeren von 1,4-Cyclohexandicarbonsäure mit Decamethylendiamin und 2-Methylpentamethylendiamin.

7. Verfahren zum Herstellen eines Verbundmaterials, umfassend:

i) Bereitstellen

a) einer ersten Komponentenvorläuferzusammensetzung, die eine erste Komponentenvorläuferzusammensetzung [Zusammensetzung (C1)] umfasst, umfassend:

- mindestens einen Fluorkautschuk-Vorläufer, der ausgewählt ist aus der Gruppe bestehend aus:

(i) einer Mischung von:

(A) mindestens einem auf Vinylidenfluorid basierenden Fluorelastomer, das wiederkehrende Einheiten umfasst, die von Vinylidenfluorid (VDF) und von mindestens einem zusätzlichen (per)fluorierten Monomer, das von VDF verschieden ist, abgeleitet sind, [Fluorelastomer (A)]; und
(B) mindestens einem Chlortrifluorethylen enthaltenden Polymeradditiv [Additiv (B)], das von Fluorelastomer (A) verschieden ist;

(ii) mindestens einem Cl-modifizierten auf Vinylidenfluorid basierenden Fluorelastomer, das wiederkehrende Einheiten umfasst, die von VDF abgeleitet sind, wiederkehrende Einheiten, die von Chlortrifluorethylen abgeleitet sind, und mindestens ein zusätzliches (per)fluoriertes Monomer, das von VDF und CTFE verschieden ist, umfasst, [Fluorelastomer (A')]; und
(iii) Gemische davon;
wobei der Fluorkautschuk-Vorläufer einen Gesamtgehalt an Chlor im Bereich von 0,2 bis 5,0 Gew.-%, bezogen auf das Gesamtgewicht an Fluorkautschuk-Vorläufer umfasst;

- mindestens eine polyhydroxylierte Verbindung [Verbindung (OH)];
- mindestens einen Beschleuniger [Beschleuniger (A)], ausgewählt aus der Gruppe bestehend aus organischer P-, As-, Se- oder S-Onium-Verbindung, Aminophosphonium-Derivaten, Phosphoranen und Diphosphiniminium-Verbindungen;
und
- eine zweite Komponentenvorläuferzusammensetzung (C2), die mindestens ein Polyamid in einer Menge von mindestens 50 Gew.-%, bezogen auf das Gesamtgewicht der Zusammensetzung (C2), umfasst;

(ii) Bereitstellen der ersten Komponente durch Härten der Zusammensetzung (C1) und der zweiten Komponente durch Formen der Zusammensetzung (C2),
wobei das Verfahren das Ausbilden einer direkten Bindung zwischen der ersten und der zweiten Komponente durch Härten der ersten Komponentenvorläuferzusammensetzung (C1) während des Inkontaktbringens der ersten Komponentenvorläuferkomponente (C1) mit der zweiten Komponentenvorläuferzusammensetzung (C2) oder mit der zweiten Komponente umfasst.

8. Verfahren nach Anspruch 7, wobei das Härten der Zusammensetzung (C1) durch Erwärmen der Zusammensetzung (C1) bei einer Temperatur von mindestens 155 °C, vorzugsweise mindestens 160 °C, besonders bevorzugt von mindestens 165 °C erzielt wird.

9. Verfahren nach Anspruch 7 bis 8, wobei das Polyamid ein teilkristallines Polyamid ist und wobei die zweite Komponente in ihrer geformten Form, die folgende Ungleichung erfüllt, wenn sie zum Ausführen des Härtens mit Zusammensetzung (C1) in Kontakt gebracht wird:

$$(\Delta H_f - \Delta H_c) \times f_{PA} \leq 25 \text{ J/g}$$

wobei:

$\Delta H_f$ die Schmelzwärme, gemessen mittels DSC bei Bestimmung im ersten Heizzyklus bei einer Aufheizgeschwindigkeit von 20 °C/min, ist;
$\Delta H_c$ die Kristallisationswärme, gemessen mittels DSC bei Bestimmung im ersten Kühlzyklus bei einer Kühlgeschwindigkeit von 20 °C/min, ist; und
$f_{PA}$ die Polyamid-Gewichtsfraktion in der zweiten Komponente ist.

10. Verfahren nach einem der Ansprüche 7 bis 9, wobei die zweite Komponente, oder zumindest die Oberfläche der zweiten Komponente, die sich in Kontakt mit der Zusammensetzung (C1) befindet, vor dem Inkontaktbringen und

Härten der Zusammensetzung (C1) auf eine erhöhte Temperatur gebracht wird.

**11.** Formartikel, umfassend das Verbundmaterial nach einem der Ansprüche 1 bis 7 oder hergestellt nach dem Verfahren nach einem der Ansprüche 7 bis 10.

**12.** Verwendung des Verbundmaterials nach einem der Ansprüche 1 bis 6 oder hergestellt nach dem Verfahren nach einem der Ansprüche 7 bis 10 beim Abdichten von Materialien wie Dichtungen und Kontakt- oder kontaktfreien Dichtmaterialien, die eine Wärmebeständigkeit, Ölbeständigkeit, Heizölbeständigkeit, Beständigkeit gegenüber zur Motorkühlung verwendetem Frostschutzmittel und Dampfbeständigkeit in Motorkörpern, Hauptantriebssystemen, Ventilsystemen, Schmier/Kühlsystemen, Kraftstoffsystemen, Lufteinlass/ablasssystemen für Automotoren; Getriebesystemen für Antriebssysteme; Fahrgestelllenksystemen; Bremssystemen; elektrischen Basiskomponenten elektrischer Einrichtungen, elektrischen Komponenten von Steuersystemen, elektrischen Komponenten von Zubehör erfordern.

**13.** Verwendung des Verbundmaterials nach einem der Ansprüche 1 bis 6 oder hergestellt nach dem Verfahren nach einem der Ansprüche 7 bis 10 beim Abdichten von Materialien in Fachgebieten, die ausgewählt sind aus Luftfahrt, Raketen, Schiffen, Ölbohrung, Chemieanlagen, pharmazeutischen Anwendungen, photographischen Anwendungen wie Entwicklern, Druckanwendungen wie Druckeinrichtungen, Beschichtungsanwendungen wie Beschichtungseinrichtungen, analytischen/wissenschaftlichen Instrumenten, Lebensmittelverarbeitungsanlageneinrichtungen, Atomkraftwerkeinrichtungen, Eisen- und Stahlanwendungen wie Eisenplattenverarbeitungseinrichtungen, allgemeinen Industrieanwendungen, elektrischen Anwendungen, Brennstoffzellen, elektronischen Komponenten und Formanwendungen wie Vor-Ort-Bauformen.

## Revendications

**1.** Matériau composite comprenant un premier composant directement lié à un deuxième composant,

- le premier composant étant un composant fluoroélastomère durci, obtenu par durcissement d'une composition de précurseur de premier composant [composition (C1)] comprenant :
- au moins un précurseur de caoutchouc fluoré choisi dans le groupe constitué par :

(i) un mélange de :

(A) au moins un fluoroélastomère à base de fluorure de vinylidène comprenant des motifs répétitifs issus du fluorure de vinylidène (VDF) et d'au moins un monomère (per)fluoré supplémentaire différent du VDF [fluoroélastomère (A)] ; et
(B) au moins un additif de polymère contenant du chlorotrifluoroéthylène [additif (B)] différent du fluoroélastomère (A) ;

(ii) au moins un fluoroélastomère à base de fluorure de vinylidène modifié par Cl comprenant des motifs répétitifs issus du VDF, des motifs répétitifs issus du chlorotrifluoroéthylène, et au moins un monomère (per)fluoré supplémentaire différent du VDF et du CTFE [fluoroélastomère (A')] ; et
(iii) des mélanges correspondants ;

ledit précurseur de caoutchouc fluoré ayant une teneur globale de chlore dans la plage de 0,2 à 5,0 % en poids, sur la base du poids total du précurseur de caoutchouc fluoré ;
- au moins un composé polyhydroxylé [composé(OH)] ;
- au moins un accélérateur [accélérateur (A)] choisi dans le groupe constitué par un composé P-onium, As-onium, Se-onium ou S-onium organique, des dérivés amino-phosphonium, des phosphoranes et des composés diphosphine-iminium ; et
- le deuxième composant étant un composant moulé à partir d'une composition de précurseur de deuxième composant [composition (C2)] comprenant au moins une résine de polyamide en une quantité d'au moins 50 % en poids, sur la base du poids total de la composition (C2).

**2.** Matériau composite selon la revendication 1, les fluoroélastomères (A) et (A') comprenant au moins 15 % en moles, préférablement au moins 20 % en moles, plus préférablement au moins 35 % en moles de motifs répétitifs issus du VDF, par rapport à tous les motifs répétitifs du fluoroélastomère ; et/ou comprenant au plus de 85 % en moles,

préférablement au plus 80 % en moles, plus préférablement au plus 78 % en moles de motifs répétitifs issus du VDF, par rapport à tous les motifs répétitifs du fluoroélastomère (A) ou (A').

**3.** Matériau composite selon l'une quelconque des revendications précédentes, l'additif (B) comprenant des motifs répétitifs issus du CTFE en une quantité de plus de 5 % en moles, préférablement d'au moins 10 % en moles, encore plus préférablement d'au moins 15 % en moles et/ou en une quantité d'au plus 75 % en moles, préférablement d'au plus à 70 % en moles, encore plus préférablement d'au plus 65 % en moles, par rapport au nombre total de moles d'additif (B), et préférablement l'additif (B) étant un copolymère de CTFE et de VDF, comprenant de 54 à 60 en moles de motifs répétitifs issus du CTFE, par rapport au nombre total de moles de motifs répétitifs de l'additif (B), les motifs répétitifs restant de l'additif (B) étant des motifs de VDF.

**4.** Matériau composite selon l'une quelconque des revendications précédentes, le précurseur de caoutchouc fluoré étant un mélange de fluoroélastomère (A) et d'additif (B), et la quantité d'additif (B) étant d'au moins un 1 phr, préférablement d'au moins 2 phr, plus préférablement d'au moins 3 phr et/ou d'au plus 25 phr, préférablement d'au plus 20 phr, sur la base de 100 parties en poids de fluoroélastomère (A).

**5.** Matériau composite selon l'une quelconque des revendications précédentes, le polyamine comprenant au moins 50 % en moles, préférablement au moins 60 % en moles, plus préférablement au moins 70 % en moles, encore plus préférablement au moins 80 % en moles et le plus préférablement au moins 90 % en moles de motifs répétitifs ($R_{PA}$) parmi les formules :

$$\textbf{-NH-R}^1\textbf{-C(O)-} \quad \textbf{(I)}$$

$$\textbf{-NH-R}^2\textbf{-NH-C(O)-R}^3\textbf{-C(O)-} \quad \textbf{(II)}$$

$R^1$, $R^2$, $R^3$, égaux ou différents les uns des autres, étant des chaînes hydrocarbonées divalentes, et pouvant être aliphatiques, alicycliques, cycloaliphatiques, aromatiques ou des combinaisons correspondantes, $R^1$, $R^2$, $R^3$ pouvant contenir un ou plus d'un hétéroatome choisi dans le groupe constitué par O, N, S, P.

**6.** Matériau composite selon la revendication 5, le polyamide étant choisi dans le groupe constitué par : les polymères d'acide adipique avec la métaxylylènediamine ; les polymères d'acide téréphtalique avec la 1,9-nonanediamine ; les polymères d'acide téréphtalique avec la 1,10-décanediamine ; les copolymères d'acide téréphtalique avec la 1,9-nonanediamine et la 2-méthyle-1,8-octanediamine ; les polymères de l'acide téréphtalique avec la 1,12-dodécanediamine ; les polymères de 11-undécanediamine avec l'acide téréphtalique ; les copolymères d'acide téréphtalique et d'acide isophtalique avec l'hexaméthylènediamine ; les copolymères de l'acide téréphtalique avec l'hexaméthylènediamine et la décaméthylènediamine ; les copolymères d'acide téréphtalique et d'acide isophtalique avec l'hexaméthylènediamine et la décaméthylènediamine ; les copolymères d'acide téréphtalique avec la décaméthylènediamine et l'acide 11-amino-undécanoïque ; les copolymères d'acide téréphtalique avec l'hexaméthylènediamine et l'acide 11-amino-undécanoïque ; le copolymère d'acide téréphtalique avec l'hexaméthylènediamine et le bis-1,4-aminométhylcyclohexane ; les copolymères d'acide téréphtalique avec l'hexaméthylènediamine et le bis-1,3-aminométhylcyclohexane ; le copolymère d'hexaméthylènediamine avec de l'acide téréphtalique et de l'acide 2,6-napthalènedicarboxylique ; les copolymères d'hexaméthylènediamine avec l'acide téréphtalique et l'acide sébacique ; les copolymères d'hexaméthylènediamine avec l'acide téréphtalique et l'acide 1,12-diaminododécanoïque ; les copolymères d'hexaméthylènediamine avec l'acide téréphtalique, l'acide isophtalique et l'acide 1,4-cyclohexanedicarboxylique ; les copolymères de décaméthylènediamine avec l'acide téréphtalique et l'acide 4-aminocyclohexanecarboxylique ; les copolymères de décaméthylènediamine avec l'acide téréphtalique et l'acide 4-(aminométhyl)cyclohexanecarboxylique ; les polymères de décaméthylènediamine avec l'acide 2,6-naphtalènedicarboxylique ; les copolymères de l'acide 2,6-naphtalènedicarboxylique avec l'hexaméthylènediamine et la décaméthylènediamine ; les copolymères de l'acide 2,6-naphtalènedicarboxylique avec l'hexaméthylènediamine et la décaméthylènediamine ; les polymères de décaméthylènediamine avec l'acide 1,4-cyclohexanedicarboxylique, les copolymères d'hexaméthylènediamine avec l'acide 11-amino-undécanoïque et l'acide 2,6-napthalènedicarboxylique ; les copolymères d'acide téréphtalique avec l'hexaméthylènediamine et la 2-méthylpentaméthylènediamine ; les copolymères d'acide téréphtalique avec la décaméthylènediamine et la 2-méthylpentaméthylènediamine ; les copolymères de 2,6-napthalènedicarboxylique avec l'hexaméthylènediamine et la 2-méthylpentaméthylènediamine ; et les copolymères d'acide 1,4-cyclohexanedicarboxylique avec la décaméthylènediamine et la 2-méthylpentaméthylènediamine.

**7.** Procédé de préparation d'un matériau composite comprenant :

i) la fourniture

a) d'une composition de précurseur de premier composant comprenant une composition de précurseur de premier composant [composition (C1)] comprenant :

- au moins un précurseur de caoutchouc fluoré choisi dans le groupe constitué par :

(i) un mélange de :

(A) au moins un fluoroélastomère à base de fluorure de vinylidène comprenant des motifs répétitifs issus du fluorure de vinylidène (VDF) et d'au moins un monomère (per)fluoré supplémentaire différent du VDF [fluoroélastomère (A)] ; et
(B) au moins un additif de polymère contenant du chlorotrifluoroéthylène [additif (B)] différent du fluoroélastomère (A) ;

(ii) au moins un fluoroélastomère à base de fluorure de vinylidène modifié par Cl comprenant des motifs répétitifs issus du VDF, des motifs répétitifs issus du chlorotrifluoroéthylène, et au moins un monomère (per)fluoré supplémentaire différent du VDF et du CTFE [fluoroélastomère (A')] ; et
(iii) des mélanges correspondants ;
ledit précurseur de caoutchouc fluoré ayant une teneur globale de chlore dans la plage de 0,2 à 5,0 % en poids, sur la base du poids total du précurseur de caoutchouc fluoré ;

- au moins un composé polyhydroxylé [composé(OH)] ;
- au moins un accélérateur [accélérateur (A)] choisi dans le groupe constitué par un composé P-onium, As-onium, Se-onium ou S-onium organique, des dérivés amino-phosphonium, des phosphoranes et des composés diphosphine-iminium ; et

b) une composition de précurseur de deuxième composant (C2) comprenant au moins un polyamide en une quantité d'au moins 50 % en poids, sur la base du poids total de la composition (C2) ;

(ii) fourniture du premier composant par durcissement de la composition (C1) et du deuxième composant par moulage de la composition (C2),
le procédé comprenant la formation d'une liaison directe entre le premier et le deuxième composant par durcissement de ladite composition de précurseur de premier composant (C1) tout en mettant en contact le composant de précurseur de premier composant (C1) avec ladite composition de précurseur de deuxième composant (C2) ou avec ledit deuxième composant.

**8.** Procédé selon la revendication 7, le durcissement de la composition (C1) étant réalisé en chauffant la composition (C1) à une température d'au moins 155 °C, préférablement d'au moins 160 °C, plus préférablement d'au moins 165 °C.

**9.** Procédé selon la revendication 7 à 8, le polyamide étant un polyamide semi-cristallin, et le deuxième composant, sous sa forme moulée, satisfaisant l'inégalité suivante lorsqu'il est mis en contact avec la composition (C1) pour réaliser le durcissement :

$$(\Delta H_f - \Delta H_c) \times f_{PA} \leq 25 \text{ J/g}$$

$\Delta H_f$ étant la chaleur de fusion, mesurée par DSC, comme déterminée sur le 1$^{er}$ cycle de chauffage, à une vitesse de chauffage de 20 °C/min ;
$\Delta H_c$ étant la chaleur de cristallisation, mesurée par DSC, comme déterminée sur le 1$^{er}$ cycle de chauffage, à une vitesse de refroidissement de 20 °C/min ; et $f_{PA}$ étant la fraction pondérale de polyamide dans ledit deuxième composant.

**10.** Procédé selon l'une quelconque des revendications 7 à 9, le deuxième composant, ou au moins la surface du deuxième composant qui doit être en contact avec la composition (C1), étant amené à une température élevée avant la mise en contact et le durcissement de ladite composition (C1).

11. Article façonné comprenant le matériau composite selon l'une quelconque des revendications 1 à 7 ou fabriqué par le procédé selon l'une quelconque des revendications 7 à 10.

12. Utilisation du matériau composite selon l'une quelconque des revendications 1 à 6 ou fabriqué à partir du procédé selon l'une quelconque des revendications 7 à 10 dans des matériaux d'étanchéité tels que des joints et des matériaux d'emballage de contact ou non de contact, qui requièrent une résistance à la chaleur, une résistance à l'huile, une résistance au gasoil, une résistance à l'antigel utilisé pour le refroidissement d'un moteur et une résistance à la vapeur, dans un décor de moteur, des systèmes d'entraînement principal, des systèmes de soupape, des systèmes de lubrification/refroidissement, des systèmes de carburant, des systèmes de prise/décharge des pour des moteurs d'automobiles ; des systèmes de transmission pour des systèmes d'entraînement ; des systèmes de direction de châssis ; des systèmes de freins ; des composants électriques basiques d'appareils électriques, des composants électriques de systèmes de commande, des composants électriques d'accessoires.

13. Utilisation du matériau composite selon l'une quelconque des revendications 1 à 6 ou fabriqué à partir du procédé selon l'une quelconque des revendications 7 à 10 dans des matériaux d'étanchéité dans des domaines choisis parmi l'aviation, les fusées, les bateaux, le forage de puits de pétrole, les installations chimiques, des applications pharmaceutiques, des applications photographiques telles que des développeurs, des applications d'impression tels qu'un appareil d'impression, des applications de revêtement telles qu'un appareil de revêtement, des instruments analytiques/scientifiques, un appareil d'installation de transformation alimentaire, un appareil de centrale nucléaire, des applications liées au fer et à l'acier telles qu'un appareil de traitement de plaques de fer, des applications industrielles générales, des applications électriques, des piles à combustible, des composants électroniques et des applications de moulage telles que des moules de construction sur site.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1504438 A
- US 6162385 A
- US 20150251386 A
- US 4032699 A
- WO 2007082924 A
- EP 3437850 A
- US 4612351 A
- EP 2698247 A
- EP 661304 A
- EP 335705 A
- US 4233427 A
- US 3876654 A
- US 4259463 A
- US 3752787 A
- EP 0120462 A
- EP 0182299 A
- EP 0684277 A


### Non-patent literature cited in the description


- **JOHN MURPHY.** Additives for Plastics Handbook. 43-48